# EUROPÄISCHE PATENTSCHRIFT

(11) **EP 2 167 981 B1**
(45) Veröffentlichungstag und Bekanntmachung des Hinweises auf die Patenterteilung: **13.07.2011**
(21) Anmeldenummer: 08826794.3
(22) Anmeldetag: 20.06.2008
(51) Int. Cl.: G01P 3/36, G01P 3/44, G01P 3/66, G01P 3/68, G01N 29/26, G01N 29/07, G01N 29/11, G01N 27/90

(54) **VERFAHREN ZUR ZERSTÖRUNGSFREIEN ERFASSUNG EINER DREHBEWEGUNG AUF DER OBERFLÄCHE EINES PRÜFLINGS; VORRICHTUNG HIERZU SOWIE PRÜFEINHEIT**
METHOD FOR THE DESTRUCTION-FREE DETECTION OF A ROTATIONAL MOVEMENT ON THE SURFACE OF A TEST OBJECT; APPARATUS THEREFOR AND TEST UNIT
PROCÉDÉ DE DÉTECTION NON DESTRUCTIVE D'UN MOUVEMENT DE ROTATION À LA SURFACE D'UNE ÉPROUVETTE; DISPOSITIF ET APPAREIL D'ESSAI CORRESPONDANTS

(30) Priorität: 20.06.2007 DE 102007028876
(43) Veröffentlichungstag der Anmeldung: 31.03.2010
(73) Patentinhaber: GE Sensing & Inspection Technologies GmbH, 50354 Hürth (DE)
(72) Erfinder: KLEINERT, Wolf-Dietrich, 53125 Bonn (DE)
(74) Vertreter: Bauer Vorberg Kayser Patentanwälte
(86) Internationale Anmeldenummer: PCT/EP2008/057888
(87) Internationale Veröffentlichungsnummer: WO 2009/015940

(56) Entgegenhaltungen:
- WO-A-02/086474
- DE-A1-102004 059 856
- US-A- 4 235 112
- US-A1- 2006 130 587

## Beschreibung

Gegenstand der vorliegenden Erfindung ist eine Vorrichtung zur zerstörungsfreien Erfassung einer Drehbewegung auf der Oberfläche eines Prüflings, eine Prüfeinheit, die eine solche Vorrichtung umfasst, sowie ein Verfahren zur zerstörungsfreien Erfassung einer Drehbewegung einer Vorrichtung auf der Oberfläche eines Prüflings.

Insbesondere im Bereich der zerstörungsfreien Materialprüfung beispielsweise mittels Ultraschall oder mittels Wirbelströmen sind aus dem Stand der Technik die vielfältigsten Verfahren und Vorrichtungen bekannt, mit deren Hilfe es möglich ist, strukturelle Eigenschaften eines Prüflings, die sich beispielsweise auf das Volumen des Prüflings oder auch auf Oberflächen des Prüflings beziehen können und beispielsweise Fehlstellen, Risse, Lunker, korrodierte Oberflächen usw. betreffen können, zu erfassen. Solche Verfahren und Vorrichtungen sind z.B. aus US 4235112 und WO 02/086474 bekannt. In der Regel basieren die für solche Prüfzwecke verwendeten Vorrichtungen auf geeigneten Sende- und Empfangseinheiten in Form einer Prüfkopfanordnung, die Prüfsignale erzeugen, welche nach einer Wechselwirkung mit dem Prüfling detektiert werden. Aus den detektierten Echosignalen kann dann auf die Struktur des Prüflings im untersuchten Raumbereich zurückgeschlossen werden. Verschiebt man die Prüfkopfanordnung während des Prüfverfahrens auf der Oberfläche des Prüflings und erfasst während der Verschiebung die strukturellen Eigenschaften des Prüflings in Abhängigkeit von der Prüfkopfposition, so ist es möglich, ein räumliches Abbild der interessierenden strukturellen Eigenschaften des Prüflings zu erzeugen.

Die heute gebräuchlichen Verfahren und Vorrichtungen erzielen teilweise erstaunliche Genauigkeiten bei der Auflösung der strukturellen Eigenschaften des untersuchten Prüflings. Allerdings bleibt die bei der Verfolgung der Bewegung des Prüfkopfs auf der Oberfläche des Prüflings erzielte Auflösung in den allermeisten Fällen weit hinter dem Auflösungsvermögen des verwendeten strukturempfindlichen Untersuchungsverfahrens wie z.B. eines Ultraschall-Impuls-Echo-Verfahrens zurück. Dies liegt darin begründet, dass bis zum heutigen Tage praktisch nur mechanische Wegaufnehmer für eine Erfassung der Bewegung des Prüfkopfs auf der Oberfläche des Prüflings Verwendung finden. Diese sind prinzipbedingt mit einem relativ hohen Messfehler behaftet. Darüber hinaus sind bislang keine Systeme bekannt geworden, die es erlauben würden, eine Drehbewegung des Prüfkopfs auf der Oberfläche des Prüflings zu erfassen.

Hier setzt nun die vorliegende Erfindung ein, die es sich zur Aufgabe gemacht hat, ein Verfahren und eine Vorrichtung zur Erfassung der Bewegung einer Vorrichtung, beispielsweise eines Prüfkopfs, auf der Oberfläche eines Prüflings zur Verfügung zu stellen, welches zerstörungsfrei arbeitet und eine gegenüber den vorbekannten Verfahren und Vorrichtungen verbesserte Genauigkeit aufweist. Darüber hinaus soll die Erfassung von Drehbewegungen der Vorrichtung auf der Oberfläche des Prüflings ermöglicht werden.

Gelöst wird diese Aufgabe durch eine Vorrichtung mit den Merkmalen des Anspruchs 1 sowie durch ein Verfahren mit den Merkmalen des Anspruchs 9.

Weiterhin wird in Anspruch 7 eine Prüfeinheit angegeben, die auf einer erfindungsgemäßen Vorrichtung basiert.

Das erfindungsgemäße Verfahren arbeitet zerstörungsfrei und ist dazu vorgesehen, eine Drehbewegung einer Vorrichtung, beispielsweise eines Prüfkopfs, auf der Oberfläche eines Prüflings zu erfassen. In einer bevorzugten Weiterbildung ist das Verfahren insbesondere dazu geeignet, eine Bewegung einer Vorrichtung auf der Oberfläche eines Prüflings allgemein zu erfassen, d.h. sowohl bezüglich ihrer rotatorischen als auch bezüglich ihrer translatorischen Freiheitsgrade. Das Verfahren umfasst in seiner einfachsten Ausgestaltung die folgenden Verfahrensschritte:
a) Aussenden einer zeitlichen Folge von Anregungssignalen Si, welche zumindest teilweise in den Prüfling eindringen und mit diesem wechselwirken,
b) Empfangen von Echosignalen, die aus der Wechselwirkung der vom Sender ausgesendeten Anregungssignale Si mit dem Prüfling resultieren, mittels eines Arrays, welches eine Mehrzahl von Empfängern aufweist. Dabei bilden die von den Empfängern aufgenommenen Echosignale, die aus einem Anregungssignal Si resultieren, einen Satz M (Si) von Messwerten, und
c) Bestimmen einer Drehbewegung der Vorrichtung auf der Oberfläche des Prüflings aus einer Mehrzahl von Messwertsätzen M (Si) (zumindest aus zwei Messwertsätzen), die mit zeitlich aufeinander folgenden Anregungssignalen Si korreliert sind.

Im Zusammenhang mit der vorliegenden Erfindung wird unter einer zeitlichen Folge von Anregungssignalen Si im Allgemeinen eine Folge beispielsweise impulsförmiger Signale verstanden, die sich in regelmäßigem zeitlichem Abstand wiederholen. Insbesondere kann es sich hierbei um eine regelmäßige Folge von kurzen Ultraschallpulsen handeln. Das Verfahren lässt sich andererseits aber auch erstrecken auf kontinuierliche Anregungssignale. Im Wesentlichen kommt es im Rahmen der vorliegenden Erfindung darauf an, dass mittels der Empfänger Echosignale aus dem Prüfling in definierten zeitlichen Abständen voneinander aufgenommen werden. Bei einem kontinuierlichen Anregungssignal können die Echosignale beispielsweise in feststehenden Zeitabständen von beispielsweise 40 Millisekunden entsprechen 25 Messwertsätzen M (Si) pro Sekunde aufgenommen werden. Weiterhin ist es möglich, die zeitliche Abfolge der Anregungssignale mit der zeitlichen Abfolge der empfangenen Echosignale zu synchronisieren. Besteht das Anregungssignal aus einer Folge von Pulsen, so besteht auch das Echosignal aus einer Folge von Pulsen. Diese können beispielsweise mittels kontinuierlich arbeitenden Empfängern detektiert und nachfolgend im Rahmen einer time of flight (TOF) Messung ausgewertet werden (Puls-Echo-Verfahren).

Die Anregungssignale, die im Rahmen des erfindungsgemäßen Verfahrens verwendet werden, sollen dabei so geartet sein, dass sie mit strukturellen Eigenschaften des Prüflings wechselwirken, wie beispielsweise geometrischen Strukturen einer Grenzfläche oder Materialinhomogenitäten im Volumen des Prüflings. Beispiele hierfür sind korrodierte Oberflächen sowie Einschlüsse bzw. Fehlstellen im Volumen des Prüflings wie Lunker und Risse.

In einer ersten bevorzugten Ausgestaltung des erfindungsgemäßen Verfahrens werden aus den aufgenommnen Impulsechos Rückschlüsse gezogen auf die lokalen strukturellen Eigenschaften des Prüflings. Wird ein Empfängerarray verwendet, so kann bei geeigneter Verfahrensführung unmittelbar ein räumliches Abbild der strukturellen Eigenschaft des Prüflings erzeugt werden, z.B. eine räumliche Darstellung der lokalen Ultraschallreflektivität in Form eines C-Scans, zentriert um die lokale Position X0 des Empfängerarrays. Im einfachsten Fall handelt es sich bei einem solchen Abbild um ein Reflexionsmuster, welches dem aus der Optik mit kohärenten Strahlen bekannten "Speckle-Muster" ähnelt, das man aus der Reflexion eines Prüfstrahls an einer räumlichen Struktur wie einer rauen Oberfläche erhält.

Wird das Empfängerarray auf der Oberfläche des Prüflings in eine neue Position X1 bewegt, so wird ein neues Abbild der strukturellen Eigenschaften erzeugt zentriert um die neue Position X1, welches bevorzugt teilweise räumlich mit dem an der ersten Position X0 erzeugten Abbild überlappt. Aus einem Vergleich der Abbilder an den Positionen X0 und X1 kann dann auf die Bewegung des Empfängerarrays auf der Oberfläche des Prüflings zurückgeschlossen werden. Hierzu kann beispielsweise auf einen mathematischen Algorithmus zurückgegriffen werden, wie er in Anlage 1 skizziert ist. Zugleich kann - muss aber nicht - aus den Bewegungsdaten sowie der Abfolge der Abbilder ein Gesamtabbild der räumlichen Verteilung der (auch für die Bewegungserfassung herangezogenen) strukturellen Eigenschaften des Prüflings erzeugt werden.

In einer weiteren bevorzugten Ausgestaltung des erfindungsgemäßen Verfahrens werden an einer Prüfposition X des Empfängerarrays mehrere Abbilder des Prüflings erzeugt, von denen zumindest eines dem vorstehend beschriebenen Algorithmus zur Bestimmung der Bewegung des Empfängerarrays zugrunde gelegt wird. So kann beispielsweise in einem Ultraschallbasierten Impuls-Echoverfahren das Rückwandecho des Prüflings verwendet werden, um die Bewegung des Empfängerarrays zu analysieren. Hier wird typisch in Senkrechteinschallung gearbeitet. Für die Erzeugung eines Abbilds der räumlichen Verteilung der strukturellen Eigenschaften des Prüflings hingegen können z.B. auch Echosignale aus dem Volumen des Prüflings verwendet werden, die beispielsweise auch bei Schrägeinschallung gewonnen wurden. Auch müssen diese Echosignale nicht zwingend auf denselben Anregungspuls zurückgehen, vielmehr können sie auch mittels eines nachfolgenden Pulses einer Pulsfolge generiert werden. Insbesondere können hier von Puls zu Puls die Ultraschalleigenschaften des eingeschallten Ultraschallbündels wie Einschallwinkel oder Fokustiefe verändert werden.

Besonders einfach auszuführen ist das erfindungsgemäße Verfahren, wenn die das Array ausbildenden Empfänger in einer Ebene liegend angeordnet sind. Dabei umfasst das Array vorzugsweise zumindest zwei lineare Anordnungen von jeweils zumindest drei Empfängern, die sich in verschiedenen Raumrichtungen erstrecken. In einer verbesserten Ausführungsform sind die das Array ausbildenden Empfänger auch auf Gitterpunkten eines zweidimensionalen Gitters angeordnet, wobei in jeder der beiden Hauptrichtungen des Gitters zumindest drei Empfänger angeordnet sind.

Besondere Vorteile ergeben sich, wenn zumindest einer der Empfänger des Arrays, insbesondere aber alle Empfänger des Arrays, so ausgebildet sind, dass sie neben ihrer Eigenschaft als Empfänger weiterhin auch als Sender zum Aussenden der zeitlichen Folge von Anregungssignalen Si betrieben werden können. Beispielhaft seien hierfür Arrays von Ultraschallwandlern genannt, wie sie aus dem Stand der Technik bekannt sind, die sowohl als Ultraschallsender als auch als Ultraschallempfänger fungieren können.

Neben den vorstehend bereits genannten Ultraschallempfängern können als Empfänger aber auch eine Vielzahl von anderen Empfängern verwendet werden, wie beispielsweise Wirbelstromsensoren, elektrische Sensoren, Magnetfeldsensoren oder auch Sensoren für elektromagnetische Strahlung wie Licht im infraroten, sichtbaren bzw. ultravioletten Wellenlängenbereich sowie Röntgenstrahlung. Entsprechend werden geeignete Signalquellen als Sender eingesetzt.

Wie vorstehend bereits erwähnt wurde, wird in einer bevorzugten Ausgestaltung des erfindungsgemäßen Verfahrens nicht nur eine Drehbewegung der Vorrichtung auf der Oberfläche des Prüflings erfasst. Vielmehr wird in einem weiteren Verfahrensschritt zusätzlich eine translatorische Bewegung der Vorrichtung auf der Oberfläche des Prüflings aus der Mehrzahl der erfassten Messwertsätze M (Si) bestimmt. In der bevorzugten Ausgestaltung des erfindungsgemäßen Verfahrens, welches sich aus dem nachfolgend diskutierten Ausführungsbeispiel ergibt, basiert die Bestimmung der Drehbewegung der Vorrichtung auf der Oberfläche des Prüflings auf einer vorab durchzuführenden Bestimmung der translatorischen Bewegung der Vorrichtung auf der Oberfläche des Prüflings.

In einer weiteren bevorzugten Weiterbildung des erfindungsgemäßen Verfahrens wird in einem weiteren Verfahrensschritt ein Abbild der räumlichen Verteilung der strukturellen Eigenschaft des Prüflings, auf die das eingesetzte Messverfahren wie beispielsweise die Reflektion von kurzen Ultraschallpulsen empfindlich ist, aus den erfassten Bewegungsdaten der Messvorrichtung auf der Oberfläche des Prüflings sowie den dabei erfassten Messwertsätzen M (Si) erzeugt. Dabei kann das so erzeugte Abbild der strukturellen Eigenschaft des Prüflings vorteilhaft auf einer Anzeigeeinheit dargestellt werden.

Im Rahmen der in Anlage 1 enthaltenen ergänzenden Ausführungen zur vorliegenden Erfindung wird u.a. darauf eingegangen, dass sich die im Rahmen des erfindungsgemäßen Verfahrens gewonnenen Bewegungsdaten sowie Daten über die strukturellen Eigenschaften des Prüflings vorteilhaft in ein dreidimensionales (beispielsweise CAD-basiertes) Modell des Prüflings eintragen lassen. Auf diese Weise entsteht eine dreidimensionale Darstellung der strukturellen Eigenschaften des Prüflings, welche sich hervorragend zur Protokollierung der durchgeführten Messung eignet.

Die erfindungsgemäße Vorrichtung zur zerstörungsfreien Erfassung einer Drehbewegung auf der Oberfläche eines Prüflings, insbesondere einer Drehbewegung der Vorrichtung selbst, umfasst:
a) einen Sender, der dazu eingerichtet ist, eine zeitliche Folge von Anregungssignalen Si auszusenden, welche zumindest teilweise in den Prüfling eindringen und mit diesem wechselwirken. Dabei gelten im Zusammenhang mit der hier beanspruchten Aussendung einer zeitlichen Folge von Anregungssignalen die in Bezug auf das erfindungsgemäße Verfahren bereits gemachten Bemerkungen, insbesondere dass es sich auch hier um ein kontinuierliches Anregungssignal handeln kann.
b) ein Array bestehend aus einer Mehrzahl von Empfängern, die dazu eingerichtet sind, Echosignale zu empfangen, die aus der Wechselwirkung der vom Sender ausgesendeten Anregungssignale Si mit dem Prüfling resultieren. Dabei bilden die von den Empfängern aufgenommenen Echosignale, die mit einem gemeinsamen Anregungssignal Si korreliert sind, einen Satz M (Si) von Messwerten, und
c) eine Auswerteeinheit, die dazu eingerichtet ist, aus einer Mehrzahl von Messwertsätzen M (Si), die mit zeitlich aufeinander folgenden Anregungssignalen Si korreliert sind (wobei es sich zumindest um zwei Messwertsätze handelt), eine Drehbewegung der Vorrichtung auf der Oberfläche zu bestimmen.

In einer bevorzugten Weiterbildung der erfindungsgemäßen Vorrichtung ist die Auswerteeinheit weiterhin dazu eingerichtet, neben der Drehbewegung der Vorrichtung auf der Oberfläche aus der Mehrzahl von Messwertsätzen M (Si) weiterhin eine translatorische Bewegung der Vorrichtung auf der Oberfläche des Prüflings zu bestimmen.

Bezüglich weiterer vorteilhafter Ausgestaltungen der erfindungsgemäßen Vorrichtung wird auf die Unteransprüche verwiesen, deren Details im Wesentlichen bereits im Zusammenhang mit dem erfindungsgemäßen Verfahren erläutert wurden.

Besondere Vorteile ergeben sich weiterhin, wenn die erfindungsgemäße Vorrichtung zum Aufbau einer Prüfeinheit herangezogen wird, die zur ortsaufgelösten Bestimmung einer strukturellen Eigenschaft eines Prüflings mittels zerstörungsfreier Werkstoffprüfung vorgesehen ist. Dabei ist die Prüfeinheit dazu eingerichtet, aus den von der Vorrichtung erfassten Bewegungsdaten der Vorrichtung (beispielsweise des Prüfkopfs) sowie den erfassten Messwertsätzen M (Si) ein Abbild der räumlichen Verteilung der strukturellen Eigenschaft des Prüflings zu erzeugen. Insbesondere ist es dabei von Vorteil, wenn die verwendeten Bewegungsdaten sowohl die rotatorische als auch die translatorische Bewegung der Vorrichtung, beispielsweise also des Prüfkopfs, auf der Oberfläche des Prüflings betreffen.

In einer bevorzugten Ausgestaltung ist die erfindungsgemäße Prüfeinheit dazu eingerichtet, das erzeugte Abbild der räumlichen Verteilung der strukturellen Eigenschaften des Prüflings auf einer Anzeigeeinheit, beispielsweise einem LCD-Bildschirm oder auch in einem computergenerierten Ausdruck darzustellen.

Eine weitere Vorrichtung, die mit dem vorstehend erläuterten Verfahren sowie der Vorrichtung und der Prüfeinheit über eine gemeinsame erfinderische Idee verbunden ist, ist ebenfalls zur zerstörungsfreien Erzeugung eines Abbilds der räumlichen Verteilung einer strukturellen Eigenschaft eines Prüflings vorgesehen. Diese Vorrichtung umfasst einen ersten Sender, der dazu eingerichtet ist, eine zeitliche Folge von Anregungssignalen P auszusenden, welche zumindest teilweise in den Prüfling eindringen und mit einer strukturellen Eigenschaft des Prüflings wechselwirken. Beispielhaft hierfür sei ein Ultraschallsender genannt, der eine Folge von kurzen Ultraschallpulsen aussendet, die in das Volumen des Prüflings eingekoppelt werden und an strukturellen Eigenschaften des Prüflings wie beispielsweise den Grenzflächen des Prüflings bzw. Strukturen im Prüfling wie Fehlstellen, Lunkern, Einschlüssen oder Rissen ganz oder teilweise reflektiert werden. Auch hier sei darauf hingewiesen, dass die vom ersten Sender ausgesandte zeitliche Folge von Anregungssignalen P im Grenzfall auch ein kontinuierliches Anregungssignal darstellen kann.

Weiterhin umfasst die erfindungsgemäße Vorrichtung einen ersten Empfänger, der dazu eingerichtet ist, die vom ersten Sender ausgesendeten Anregungssignale P nach ihrer Wechselwirkung mit dem Prüfling als Echosignale aufzunehmen. Wiederum sei auf das Beispiel der Ultraschalltechnik verwiesen, in deren Kontext der erste Empfänger als Ultraschallempfänger ausgebildet wäre, der dazu vorgesehen ist, reflektierte Ultraschallpulse aufzunehmen und beispielsweise aus time of flight (TOF) Messungen sowie der gemessenen Intensität der reflektierten Ultraschallpulse auf die Lage, die Größe und die Struktur der reflektierenden Strukturen im Prüfling zurückzuschließen.

Weiterhin umfasst die erfindungsgemäße Vorrichtung einen zweiten Sender, der dazu eingerichtet ist, eine zeitliche Folge von Anregungssignalen Si auszusenden, welche mit dem Prüfling wechselwirken, wobei hier nicht zwingend ein zumindest teilweises Eindringen der Anregungssignale in das Volumen des Prüflings erforderlich ist. Vielmehr kann auch eine Wechselwirkung der Anregungssignale Si mit der Oberfläche des Prüflings, welche eine gewisse Struktur aufweist, ausreichend sein. Mit dem zweiten Sender zusammen wirkt ein Array bestehend aus einer Mehrzahl von zweiten Empfängern, die dazu eingerichtet sind, Echosignale zu empfangen, die aus der Wechselwirkung der vom zweiten Sender ausgesendeten Anregungssignalen Si mit dem Prüfling resultieren. Dabei bilden die von den Empfängern aufgenommenen Echosignale, die zu einem gemeinsamen Anregungssignal Si gehören, jeweils einen Satz M (Si) von Messwerten.

Dem zweiten Sender und dem Array von zweiten Empfängern zugeordnet ist weiterhin eine Auswerteeinheit, die dazu eingerichtet ist, aus einer Mehrzahl von Messwertsätzen M (Si), insbesondere aus zumindest zwei Messwertsätzen, die mit zeitlich aufeinander folgenden Anregungssignalen Si des zweiten Senders korreliert sind, eine Bewegung der Vorrichtung auf der Oberfläche des Prüflings zu bestimmen, wobei die Bewegung der Vorrichtung auf der Oberfläche insbesondere durch translatorische und / oder durch rotatorische Freiheitsgrade beschrieben werden kann.

Schließlich umfasst die Vorrichtung zur zerstörungsfreien Erzeugung eines Abbilds der räumlichen Verteilung einer strukturellen Eigenschaft eines Prüflings eine Visualisierungseinheit, die dazu eingerichtet ist, aus der von der Auswerteeinheit erfassten Bewegung der Vorrichtung auf der Oberfläche des Prüflings sowie aus den vom ersten Empfänger empfangenen Echosignalen ein Abbild der räumlichen Verteilung einer strukturellen Eigenschaft des Prüflings zu erzeugen.

Der zweite Sender, das Array (die zweiten Empfänger umfassend) und die Auswerteeinheit können dabei beispielsweise zu einer Funktionseinheit zusammengefasst sein und beispielsweise auf dem Prinzip der "optischen Maus" basieren. Durch Implementierung des erfindungsgemäßen Verfahrens in einer solchen weiterentwickelten "optischen Maus" ist es insbesondere möglich, neben der aus dem Stand der Technik bekannten Erfassung einer translatorischen Bewegung auch eine Drehbewegung der Maus zu erfassen. In einer solchen Ausgestaltung wird also die Bewegung eines Prüfkopfs, der den ersten Sender und den ersten Empfänger umfasst, auf der Oberfläche eines Prüflings registriert unter Anwendung einer vorzugsweise gemäß des erfindungsgemäßen Verfahrens weiter entwickelten optischen Maus.

Weitere Vorteile und Merkmale des erfindungsgemäßen Verfahrens, der erfindungsgemäßen Vorrichtung sowie der erfindungsgemäßen Prüfeinheit ergeben sich aus den nachstehenden Ausführungsbeispielen. Diese beziehen sich beispielhaft auf den Bereich der Ultraschallprüfung. Es wurde aber bereits darauf hingewiesen, dass daneben auch andere zerstörungsfreie Prüfmethoden wie Wirbelstrommessungen bzw. Messungen mit piezoelektrischen Sensoren, Magnetfelddetektoren oder allgemein mit Detektoren für elektromagnetische Strahlung verschiedenster Wellenlängen (z.B. Licht im sichtbaren, UV- oder IR-Spektralbereich, Röntgenstrahlung, Mikrowellenstrahlung) verwendet werden können.

Anlage 1 kann ein beispielhaft zu verstehender Algorithmus entnommen werden, auf dessen Grundlage das erfindungsgemäße Verfahren ausgeführt bzw. die Auswerteeinheit der erfindungsgemäßen Vorrichtung implementiert werden kann. Dabei ist der mathematische Algorithmus exemplarisch für den Fall einer Drehung um den Koordinatenursprung gezeigt. Für den Fachmann ist aber offensichtlich, dass sich dieser Spezialfall durch eine einfache Koordinatentransformation verallgemeinern lässt auf den Fall einer Drehung um einen beliebigen Punkt auf der Oberfläche des Prüflings.

Tragbare Ultraschalldetektoren werden oft in Prüfanwendungen eingesetzt. Bei den zu prüfenden Objekten kann es sich zum Beispiel um geschweißte Stahlteile wie Stahlrohre handeln. Der Ultraschalldetektor kann durch Öl, Wasser oder ein Schmierfett an das Teil gekoppelt werden, und der Prüfer kann den Detektor in verschiedenen Zickzackbewegungen über die zu prüfenden Bereiche führen oder ihn von diesen Bereichen fortführen. Bei den zu prüfenden Bereichen kann es sich zum Beispiel um Schweißnähte oder korrodierte Rückwände handeln. Mit einem solchen Detektor können Fehler des Teils und schlechte Schweißnähte gefunden werden. Da die Bewegung des Detektors zufällig und unbestimmt ist, können die gefundenen Fehler oft nur schwer im Verhältnis zu den Abmessungen und Konstruktionsmerkmalen des Teils sowie zur Position des Prüfkopfs abgebildet werden. Bei Teilen mit komplexer Geometrie (zum Beispiel bei Rohren oder T-Stößen) kann die Prüfung und die Ermittlung der Koordinaten gefundener Fehler in Abhängigkeit von der Position des Prüfkopfs besonders schwierig sein.

Die beigefügten Zeichnungen zeigen in:
- Figur 1:: ein Blockdiagramm eines Prüfkopfsystems gemäß einer oder mehrerer Ausführungsformen dieser Erfindung;
- Figur 2:: ein Diagramm einer Sensor-Array-Anordnung eines Prüfkopfs gemäß einer oder mehrerer Ausführungsformen dieser Erfindung;
- Figur 3:: ein Diagramm einer alternativen Sensor-Array-Anordnung eines Prüf- kopfs gemäß einer oder mehrerer Ausführungsformen dieser Erfindung;
- Figur 4:: ein Diagramm einer weiteren alternativen Sensor-Array-Anordnung ei- nes Prüfkopfs gemäß einer oder mehrerer Ausführungsformen dieser Erfindung;
- Figur 5:: ein Diagramm eines Prüfkopfs gemäß einer oder mehrerer Ausfüh- rungsformen dieser Erfindung, der zum Ermitteln eines Merkmals (in diesem Beispiel Korrosion) eines Prüfstücks eingesetzt wird;
- Figur 6:: ein Ablaufdiagramm eines Verfahrens zum Betreiben eines Prüfkopfs gemäß einer oder mehrerer Ausführungsformen dieser Erfindung; und in
- Figur 7:: ein Blockdiagramm eines Informationsverarbeitungssystems, das mit einem Prüfkopf gemäß einer oder mehrerer Ausführungsformen dieser Erfindung eingesetzt werden kann;

Aus Gründen der einfacheren und/oder klareren Darstellung sind die in den Figuren abgebildeten Elemente nicht unbedingt maßstabgerecht. Zur deutlicheren Darstellung können zum Beispiel einige Elemente im Vergleich zu anderen vergrößert abgebildet sein. Gemeinsame oder ähnliche Elemente sind in mehreren Figuren gegebenenfalls mit identischen Bezugszeichen gekennzeichnet.

In der folgenden detaillierten Beschreibung werden zahlreiche spezifische Details beschrieben, um ein eingehendes Verständnis des Gegenstands der Ansprüche zu vermitteln. Für den Fachmann ist jedoch ersichtlich, dass der Gegenstand der Ansprüche auch ohne diese spezifischen Details umgesetzt werden kann. An anderen Stellen wurden bekannte Verfahren, Vorgehensweisen, Komponenten und/oder Schaltungen nicht detailliert beschrieben.

In Teilen der folgenden detaillierten Beschreibung werden Algorithmen, Programme und/oder symbolische Darstellungen von Operationen verwendet, die zum Beispiel im Speicher eines Computers an Datenbits oder binärdigitalen Signalen durchgeführt werden. Zu diesen algorithmischen Beschreibungen und/oder Darstellungen können in der Datenverarbeitung eingesetzte Verfahren zählen, mit denen die Merkmale von Computersystemen und/oder anderen Informationsverarbeitungssystemen beschrieben werden, die mit solchen Programmen, Algorithmen und/oder symbolischen Darstellungen von Operationen arbeiten.

Ein Programm und/oder Prozess kann allgemein als eine selbstkonsistente Abfolge von Aktionen und/oder Operationen betrachtet werden, die zu einem gewünschten Ergebnis führt. Hierzu zählt die physische Handhabung physischer Quantitäten. Bei diesen Quantitäten handelt es sich üblicherweise, aber nicht notwendigerweise um elektrische und/oder magnetische Signale, die gespeichert, übertragen, kombiniert, verglichen und/oder auf andere Weise gehandhabt werden können. In der Regel werden diese Signale als Bits, Werte, Elemente, Symbole, Zeichen, Begriffe, Zahlen und/oder Ähnliches ausgedrückt. Es wird jedoch darauf hingewiesen, dass diese und ähnliche Begriffe mit den entsprechenden physischen Quantitäten verbunden werden müssen und dass es sich dabei lediglich um (in der Regel zweckdienliche) Beschreibungen dieser Quantitäten handelt.

Wenn in den folgenden Beschreibungen Begriffe wie Verarbeiten, Berechnen, Ermitteln und/oder ähnliche Begriffe verwendet werden, wird, sofern nicht anders angegeben, Bezug auf Aktionen und/oder Prozesse von Computern und/oder Rechensystemen und/oder ähnlichen elektronischen Rechengeräten genommen, mit denen Daten, die in den Registern und/oder Speichern der Computer und/oder Rechensystemen und/oder ähnlichen elektronischen Rechengeräten als physische oder elektronische Quantitäten dargestellt werden, gehandhabt oder in andere Daten transformiert werden, die in den Speichern, Registern und/oder ähnlichen Elementen von Informationspeicherungs-, Informationsübertragungs- und/oder Informationsanzeigegeräten als physische Quantitäten dargestellt werden.

Zu den beanspruchten Ausführungsformen können Geräte zur Durchführung der hier beschriebenen Operationen zählen. Bei diesen Geräten kann es sich um eigens für die jeweilige Anwendung konstruierte Geräte handeln oder um Allzweckcomputer, die durch ein darauf gespeichertes Programm selektiv aktiviert und/oder rekonfiguriert werden. Ein solches Programm kann auf Speichermedien wie Disketten, optischen Datenträgern, CD-ROMs, magneto-optischen Datenträgern, ROM-Festwertspeicher, Direktzugriffsspeicher (RAM), EPROM-Festwertspeicher, EEPROM-Festwertspeicher, Flash-Speicher, magnetischen und/oder optischen Karten und/oder anderen Medientypen gespeichert sein, die für das Speichern elektronischer Anweisungen geeignet sind und/oder an einen Systembus eines Rechengeräts und/oder anderen Informationsverarbeitungssystems gekoppelt werden können.

Die hier beschriebenen Prozesse und/oder Anzeigen beziehen sich nicht unmittelbar auf ein bestimmtes Rechengerät und/oder ein anderes Gerät. Erfindungsgemäße Programme können mit verschiedenen Allzwecksystemen verwendet werden, es kann jedoch auch sinnvoll sein, ein Spezialgerät für die Durchführung der gewünschten Methode zu konstruieren. Die gewünschte Struktur für viele solcher Systeme kann aus der folgenden Beschreibung abgeleitet werden. Die Ausführungsformen werden nicht unter Bezugnahme auf eine bestimmte Programmiersprache beschrieben. Erfindungsgemäße Programme können mit verschiedenen Programmiersprachen implementiert werden.

In den folgenden Beschreibungen und/oder Ansprüchen werden die Ausdrücke "gekoppelt" und/oder "verbunden" sowie verwandte Ausdrücke verwendet. In einer oder mehreren Ausführungsformen kann der Ausdruck "gekoppelt" verwendet werden, um anzugeben, dass sich Öl, Wasser oder ein Schmierfett zwischen dem Ultraschall-Prüfkopf und dem Prüfstück befindet. In bestimmten Ausführungsformen kann der Ausdruck "verbunden" verwendet werden, um anzugeben, dass zwei oder mehr Elemente direkten physischen und/oder elektrischen Kontakt miteinander haben. "Gekoppelt" kann bedeuten, dass zwei oder mehr Elemente direkten physischen und/oder elektrischen Kontakt haben. "Gekoppelt" kann jedoch auch bedeuten, dass zwei oder mehr Elemente keinen direkten physischen und/oder elektrischen Kontakt haben, aber zusammenarbeiten oder miteinander interagieren. Der Ausdruck "und/oder" kann folgende Bedeutungen haben: "und", "oder", "exklusives oder", "einige, aber nicht alle", "weder noch" und/oder "sowohl als auch". Der Gegenstand der Ansprüche ist in dieser Hinsicht jedoch nicht eingeschränkt.

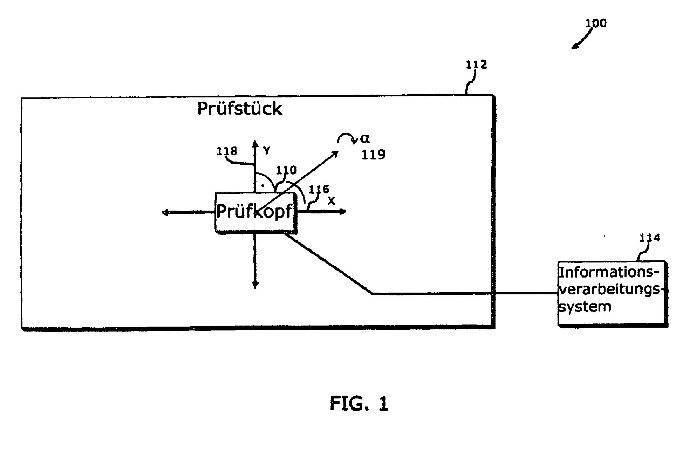

Figur 1 ist ein Blockdiagramm eines Prüfkopfsystems gemäß einer oder mehrerer Ausführungsformen dieser Erfindung. Das Prüfkopfsystem 100 kann einen Prüfkopf 110 umfassen, der über eine Oberfläche eines Prüfstücks 112 bewegt werden kann, zum Beispiel auf einer ersten Achse (X-Achse) 116 und/oder auf einer zweiten Achse (Y-Achse) 118. Weiterhin kann der Prüfkopf 110 um eine senkrecht auf der X-Achse 116 sowie der Y-Achse 118 stehende Achse 119 um einen Winkel α gedreht werden, wie durch den Pfeil angedeutet ist.

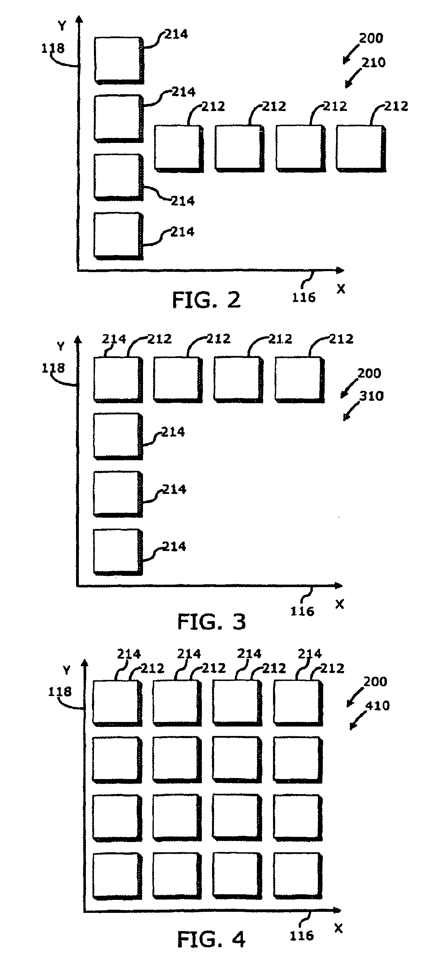

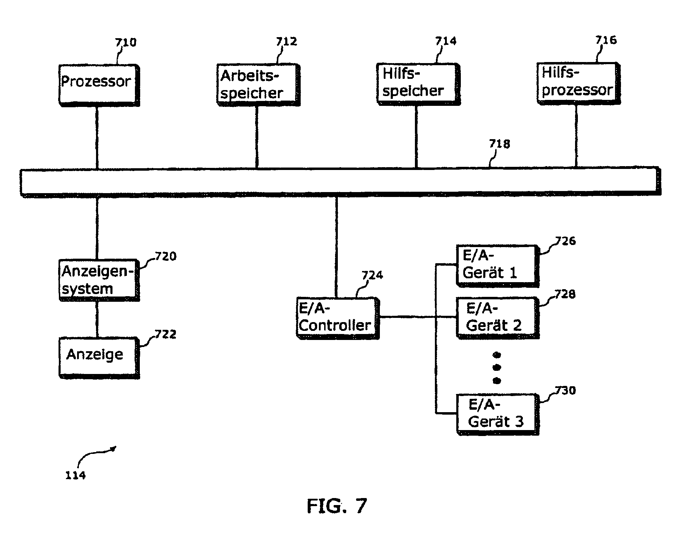

Der Prüfkopf 110 kann einen Sender und/oder ein Array aus einem oder mehreren Detektorelementen umfassen. Der Prüfkopf 110 kann an ein Informationsverarbeitungssystem 114 gekoppelt werden, zum Beispiel um den Prüfkopf 110 mit Betriebsleistung und/oder Steuersignalen zu versorgen und/oder um Daten zu empfangen, die - zum Beispiel über das Sensor-Array - mit dem Prüfkopf 110 ermittelt wurden. Beispiel-Arrays des Prüfkopfs 110 werden in den Figuren 2, 3 und/oder 4 dargestellt und in den entsprechenden Beschreibungen erläutert. Ein Beispiel für ein Informationsverarbeitungssystem 114 wird in Figur 7 dargestellt und in der entsprechenden Beschreibung erläutert. In einer oder mehreren Ausführungsformen können drei oder mehr Messwerte pro zu kodierender Achse ermittelt werden, wenn der Prüfkopf nicht bewegt wird. Anhand von drei oder mehr solcher Messwerte kann die Richtung der Bewegung auf der zu kodierenden Achse berechnet werden. Diese Messwerte können sich ändern, wenn der Prüfkopf bewegt wird. Zum Beispiel kann das Materialrauschen oder die verbliebene Wandstärke eines korrodierten Prüfstücks an jeder Position des Prüfkopfs unterschiedlich sein. Der Gegenstand der Ansprüche ist in dieser Hinsicht jedoch nicht eingeschränkt.

In einer oder mehreren Ausführungsformen kann das Prüfkopfsystem 100 zum Prüfen des Prüfstücks 112 eingesetzt werden, zum Beispiel um Fehler und/oder Defekte des Prüfstücks 112 zu ermitteln. In einem solchen Beispiel kann das Prüfstück 112 ein gefertigtes Teil wie zum Beispiel ein Rohr, einen T-Stoß oder ein Flugzeugteil wie ein Teil eines Flugzeugmotors, -rumpfs oder -flügels umfassen. Das Prüfkopfsystem 100 kann so ausgelegt sein, dass es zum Prüfen von Prüfstücken 112 mit unterschiedlichen Topologien und/oder Geometrien geeignet ist. In einer bestimmten Ausführungsform kann das Prüfstück 112 ein Organ, Gefäß und/oder anderes Gewebe eines Patienten, zum Beispiel eines Säugetiers, umfassen, wobei das Prüfkopfsystem 100 in einer medizinischen Anwendung zum Einsatz kommt. Der Prüfkopf 110 und/oder das Prüfkopfsystem 100 kann hinsichtlich Größe, Form und/oder sonstiger Merkmale für die jeweilige Anwendung des Prüfkopfsystems 100 ausgelegt sein, einschließlich, aber nicht beschränkt auf die Prüfung gefertigter Teile, medizinische und/oder chirurgische Anwendungen oder Ähnliches. Hierbei handelt es sich lediglich um Beispielanwendungen für den Einsatz des Prüfkopfsystems 100. Der Gegenstand der Ansprüche ist in dieser Hinsicht nicht eingeschränkt.

In einer oder mehreren Ausführungsformen kann das Informationsverarbeitungssystem 114 einen Speicher umfassen, der eine Datendatei enthält, die dem mit dem Prüfkopfsystem 100 zu prüfenden Prüfstück 112 entspricht, aber dies ist nicht erforderlich. Wenn es sich beim Prüfstück 112 zum Beispiel ein gefertigtes Teil handelt, kann der Speicher des Informationsverarbeitungssystems 114 eine CAD-Datei (Computer Aided Design) oder Ähnliches enthalten, wobei es sich um eine elektronische Darstellung des Prüfstücks 112 handelt, die zu Konstruktions- oder Fertigungszwecken verwendet wird. Die CAD-Datei ist nur ein Beispiel für einen Dateityp und ist nicht erforderlich. Statt einer CAD-Datei können andere Grafik- oder Bilddateien eingesetzt werden. Der Gegenstand der Ansprüche ist in dieser Hinsicht nicht eingeschränkt. In einer oder mehreren Ausführungsformen kann eine solche CAD-Datei eine zweidimensionale Darstellung des Prüfstücks 112 umfassen, und in einer oder mehreren Ausführungsformen kann eine solche CAD-Datei eine dreidimensionale Darstellung des Prüfstücks 112 umfassen. Der Gegenstand der Ansprüche ist in dieser Hinsicht jedoch nicht eingeschränkt.

In einer oder mehreren Ausführungsformen kann das Informationsverarbeitungssystem 114 die CAD-Datei während der Prüfung des Prüfstücks 112 durch das Prüfkopfsystem 100 auf einer an das Informationsverarbeitungssystem 114 gekoppelten Anzeige anzeigen. Gleichzeitig kann das Informationsverarbeitungssystem 114 Bilddaten des Prüfstücks 112, die vom Prüfkopf 110 ermittelt werden, auf der Anzeige anzeigen. So kann das Informationsverarbeitungssystem 114 zum Beispiel vom Prüfkopf 110 ermittelte Daten des Prüfstücks 112 mit in der CAD-Datei enthaltenen Daten des Prüfstücks 112 korrelieren. Eine solche Korrelation kann der Bediener, der den Prüfkopf 110 des Prüfkopfsystems 100 zum Beispiel entlang dem Prüfstück 112 navigiert, bei der Navigation als Referenz für den zu prüfenden Bereich und/oder das zu prüfende Merkmal nutzen. Wenn der Bediener zum Beispiel einen Fehler und/oder Defekt an einer bestimmten Position des Prüfstücks 112 findet, kann er diese Position anhand der in der CAD-Datei gespeicherten Konstruktionsdaten des Prüfstücks 112 ermitteln. Diese Prüfdaten können zur späteren Verwendung und/oder Untersuchung den Daten des Prüfstücks 112 zugeordnet werden. In einer oder mehreren Ausführungsformen kann der Bediener eine Kennzeichnung der Position eines gefundenen Fehlers und/oder Defekts und/oder eines anderen beachtenswerten Merkmals des Prüfstücks 112 in der CAD-Datei speichern. Hierbei handelt es sich lediglich um Beispielanwendungen für den Einsatz des Prüfkopfsystems 100. Der Gegenstand der Ansprüche ist in dieser Hinsicht nicht eingeschränkt.

Figur 2 ist ein Diagramm einer Sensor-Array-Anordnung eines Prüfkopfs gemäß einer oder mehrerer Ausführungsformen dieser Erfindung. Wie in Figur 2 dargestellt wird, kann das Array 200 von Sensor-Elementen 212 und/oder 214 auf dem Prüfkopf 110 positioniert werden, um Merkmale des Prüfstücks 112 zu ermitteln. In einer Ausführungsform können die Sensor-Elemente Ultraschalldetektoren, GMI-Detektoren (Giant Magneto Impedance), piezoelektrische Sensoren, Hall-Sensoren, Wirbelstromsensoren oder andere geeignete Sensor-Elemente oder Ähnliches umfassen. In einer oder mehreren Ausführungsformen kann der Prüfkopf 110 einen Sender umfassen, der Energie, Signale, Pulse und/oder Impulse überträgt, die von einem oder mehreren Sensoren 212 und/oder 214 des Arrays 200 erfasst werden können. Diese Übertragungen können zu unterschiedlichen Zeiten erfolgen und von unterschiedlicher Dauer, Form und/oder Pulsbreite sein. In einer oder mehreren Ausführungsformen können diese Übertragungen zum Beispiel Pulsformen umfassen und in einer oder mehreren alternativen Ausführungsformen können diese Übertragungen Formen und/oder Impulse gemäß der diracschen Deltafunktion umfassen. Der Gegenstand der Ansprüche ist in dieser Hinsicht jedoch nicht eingeschränkt. Bei den übertragenen Signalen kann es sich auch um Hochfrequenzsignale handeln. In einer oder mehreren Ausführungsformen kann der Betriebsfrequenzbereich des Prüfkopfs 110 zwischen ca. 1 MHz und 25 MHz liegen, zum Beispiel beim Prüfen von Stahlteilen oder Ähnlichem oder zum Durchdringen des Materials des Prüfstücks 112. In einer oder mehreren Ausführungsformen kann eine Präzision des Prüfkopfs 110 unter 1 Millimeter und/oder unter 100 Mikrometer liegen, zum Beispiel in Abhängigkeit von der Modalität und/oder Frequenz des Prüfkopfs 110. In medizinischen Anwendungen kann der Prüfkopf 110 eine Katheterspitze oder Ähnliches umfassen, so dass Gefäßwände untersucht werden können. Es können Abweichungen eines ermittelten Musters einer Gefäßwand von der Innenfläche der Gefäßwand ermittelt und optional mit einer zuvor erstellten Bilddatei des Gefäßes verknüpft werden. Bei dieser Bilddatei kann es sich zum Beispiel um eine dreidimensionale Bilddatei handeln, die beispielsweise per Kernspintomographie, Computertomographie oder ein ähnliches Verfahren erstellt wurde. Durch die Verknüpfung der ermittelten Abweichungen mit der Bilddatei kann die Position eines Merkmals oder einer Auffälligkeit genauer bestimmt werden. Der Gegenstand der Ansprüche ist in dieser Hinsicht jedoch nicht eingeschränkt.

In einer Ausführungsform kann das Array 200 eine erste Anordnung 210 von Sensor-Elementen 212 und/oder 214 umfassen, wobei in der ersten Anordnung 210 eine erste Sensorenreihe 212 auf der Achse 116 positioniert sein kann, um zum Beispiel die Bewegung des Prüfkopfs 110 zu ermitteln und/oder Bilder oder andere Daten des Prüfstücks 112 auf der Achse 116 aufzunehmen, und wobei eine zweite Sensorenreihe 214 auf der Achse 118 positioniert sein kann, um zum Beispiel die Bewegung des Prüfkopfs 110 zu ermitteln und/oder Bilder oder andere Daten des Prüfstücks 112 auf der Achse 118 aufzunehmen. Die in Figur 2 dargestellte Anordnung 210 des Arrays 200 kann im Allgemeinen eine T-Form oder eine ähnliche Form aufweisen. In einer oder mehreren alternativen Ausführungsformen können Variationen der Anordnung 210 des Arrays 200 eine X-Form oder eine ähnliche Form aufweisen, wobei zum Beispiel einige der Sensoren 212 auf einer Seite der Sensorenreihe 214 angeordnet sind, und einige der Sensoren 212 auf einer anderen Seite der Sensorenreihe 214 angeordnet sind. Hierbei handelt es sich lediglich um beispielhafte Ausführungsformen der Anordnung 210 des Arrays 200. Der Gegenstand der Ansprüche ist in dieser Hinsicht nicht eingeschränkt.

Figur 3 ist ein Diagramm einer alternativen Sensor-Array-Anordnung eines Prüfkopfs gemäß einer oder mehrerer Ausführungsformen dieser Erfindung. Wie in Figur 3 dargestellt wird, kann die Anordnung 310 des Arrays 200 von Sensoren 212 und/oder 214 eine L-Form oder eine ähnliche Form aufweisen. Bei einer solchen Anordnung und/oder Varianten einer solchen Anordnung können ein oder mehrere Sensoren in einer ersten Sensorenreihe 212 auch einen Sensor umfassen, der zu einer zweiten Sensorenreihe 214 gehört, so dass mindestens einer der Sensoren so betrieben wird, dass eine Bewegung des Prüfkopfs 110 und/oder ein Bild und/oder andere Daten des Prüfstücks 112 in einer ersten Richtung auf der Achse 116 und/oder in einer zweiten Richtung auf der Achse 118 ermittelt werden kann. Der Gegenstand der Ansprüche ist in dieser Hinsicht jedoch nicht eingeschränkt.

Figur 4 ist ein Diagramm einer weiteren alternativen Sensor-Array-Anordnung eines Prüfkopfs gemäß einer oder mehrerer Ausführungsformen dieser Erfindung. Wie in Figur 4 dargestellt wird, kann die Anordnung 410 des Arrays 200 ein 4-mal-4-Raster von Sensoren 212 und/oder 214 umfassen. Die Anordnung 410 in Figur 4 umfasst ein einzelnes 4-mal-4-Raster von Sensoren, aber es können auch andere Anordnungen eingesetzt werden, zum Beispiel können Sensoren in einem 1-mal-2-Raster, einem 1-mal-16-Raster, einem 1-mal-128-Raster, einem 8-mal-8-Raster und/oder in einer beliebigen anderen Anordnung positioniert werden. Die in Figur 2, Figur 3 und/oder Figur 4 dargestellten Anordnungen 210, 310 und/oder 410 des Arrays 200 sind lediglich Beispielanordnungen des Arrays 200. Der Gegenstand der Ansprüche ist in dieser Hinsicht nicht eingeschränkt.

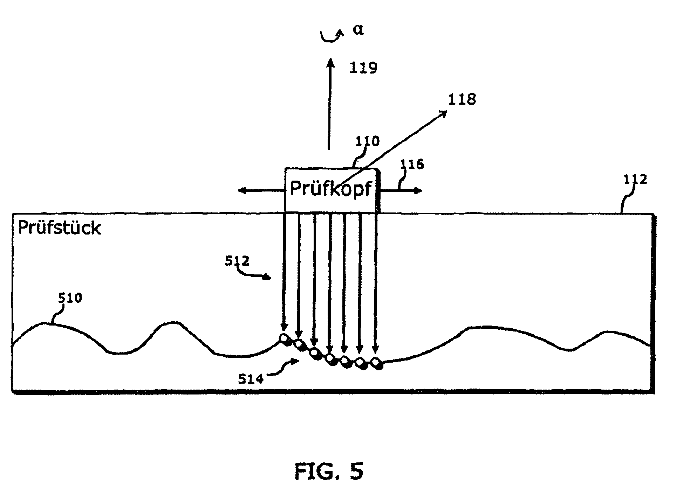

Figur 5 ist ein Diagramm eines Prüfkopfs gemäß einer oder mehrerer Ausführungsformen dieser Erfindung, der zum Ermitteln eines Merkmals eines Prüfstücks eingesetzt wird. Wie in Figur 5 dargestellt wird, kann der Prüfkopf 110 auf der Achse 116 bewegt werden, zum Beispiel entlang dem Prüfstück 112. Figur 5 stellt aus Vereinfachungsgründen nur eine Hauptachse (hier X-Achse 116) des Arrays dar, welches gemäß des erfindungsgemäßen Verfahrens eingesetzt werden soll bzw. welches von der erfindungsgemäßen Vorrichtung umfasst ist. In einer von der ersten Hauptrichtung unabhängigen zweiten Hauptrichtung (hier z.B. Y-Achse 118), die hier nicht dargestellt ist, ergibt sich ein analoges Bild, was für den Fachmann offensichtlich ist. Weiterhin kann der Prüfkopf 110 auf der Oberfläche des Prüfstücks 112 um die zu den beiden vorgenannten Achsen 116, 118 senkrechte Achse 119 um einen Winkel α gedreht werden.

Der Prüfkopf 110 kann ein Signal 512 ausgeben, das das Prüfstück 112 zumindest teilweise durchdringt. In einer oder mehreren Ausführungsformen kann das Signal 512 bei unbewegtem Prüfkopf 110 zumindest teilweise vom Merkmal 510 des Prüfstücks 112 reflektiert werden, zum Beispiel als Echosignal, so dass drei oder mehr Werte pro Achse ermittelt werden und kodiert werden können. In einer oder mehreren Ausführungsformen kann das Signal 512 zumindest teilweise vom Merkmal 510 reflektiert werden und es zumindest teilweise durchdringen, aber der Prüfkopf 110 kann das Merkmal 510 zum Beispiel anhand eines vom Merkmal 510 reflektierten Teils des Signals 512 ermitteln. In einer oder mehreren Ausführungsformen kann eine Signalintensität und/oder eine Signalstärke des Signals 512 angepasst und/oder eine Frequenz des Signals 512 eingestellt werden, um eine gewünschte Durchdringungstiefe des Signals 512 durch das Prüfstück 112 zu erzielen, so dass das Merkmal 510 zuverlässig ermittelt werden kann. In einer oder mehreren Ausführungsformen kann das Merkmal 510 zum Beispiel einen Fertigungsmangel und/oder einen Fehler, einen Hohlraum, eine Spannung, einen Riss, einen Bruch, eine Schicht, einen Einschluss und/oder - bei metallischen oder ähnlichen Prüfstücken 112 - eine Korrosion umfassen. Der Gegenstand der Ansprüche ist in dieser Hinsicht jedoch nicht eingeschränkt. Wenn der Prüfkopf 110 auf der Achse 116 bewegt wird, kann der Prüfkopf 110 einen oder mehrere Datenpunkte 514 ermitteln, und in einer bestimmten Ausführungsform kann der Prüfkopf 110 drei oder mehr Datenpunkte ermitteln, die dem Merkmal 510 entsprechen und in regelmäßigen Zeitintervallen ermittelt werden. Durch die Bewegung des Prüfkopfs 110 auf der Achse 116 entlang dem Prüfstück 112 kann der Prüfkopf 110 Daten ermitteln, aus denen Positionsdaten, Geschwindigkeitsdaten, Bilddaten und/oder andere Daten ermittelt werden können. Diese Daten können optional an das Informationsverarbeitungssystem 114 übergeben werden, wo sie zum Beispiel gespeichert, gehandhabt, verarbeitet, übertragen und/oder angezeigt werden können. Mit dem Prüfkopf 110 können zum Beispiel Daten zu losem Material im Prüfstück 112 ermittelt und in ein Bild umgewandelt werden, das dann auf einer Anzeige eines Informationsverarbeitungssystems 114 angezeigt wird. Anhand eines solchen Bildes kann der Bediener eine Sichtprüfung des Prüfstücks 112 vornehmen und/oder den Prüfkopf 110 visuell auf der Achse 116 des Prüfstücks 112 navigieren, wobei ein Bild zum Beispiel zur Dokumentation der Prüfung eingesetzt werden kann. Der Gegenstand der Ansprüche ist in dieser Hinsicht jedoch nicht eingeschränkt.

In einer oder mehreren Ausführungsformen kann das Prüfkopfsystem 100 zum Beispiel zur Auffindung von Korrosion im Prüfstück 112 eingesetzt werden. Das Array 200 kann ein 8-mal-8-Array von Sensoren umfassen. Ein virtueller Prüfkopf, der zum Beispiel vier Elemente umfasst, kann entlang einem ersten Bereich des Arrays 200 abgetastet werden, zum Beispiel entlang 4 mal 8 Elementen. Eine solche Abtastung kann elektronisch vorgenommen werden und in Y-Richtung auf der Achse 118 erfolgen, dann um ein Element in X-Richtung auf der Achse 116 verschoben und anschließend in Y-Richtung fortgesetzt werden. Eine mehrdimensionale Abtastung (C-Scan) kann erstellt werden. Ein solcher C-Scan kann aus einem Echo des Signals 512 erstellt werden, der vom Merkmal 510 reflektiert wird, zum Beispiel wenn es sich beim Merkmal 510 um Korrosion im Prüfstück 110 handelt. Die Koordinaten einer solchen Verschiebung können zum Beispiel ermittelt werden, indem mehrere bei unbewegtem Prüfkopf 110 und/oder bei entlang dem Prüfstück 112 bewegtem Prüfkopf 110 erstellte C-Scans miteinander verglichen werden.

Alternativ kann der Prüfkopf 200 auch auf der Oberfläche des Prüfstucks 112 bewegt werden, wobei sowohl eine translatorische als auch eine rotatorische Bewegung des Prüfkopfs 200 möglich ist.

In einer oder mehreren Ausführungsformen kann dieses Verfahren einer bei optischen Mäusen eingesetzten Bewegungserkennungsmethode ähneln, und der erste Bereich des Arrays kann für Positionsdaten genutzt werden. Ein anderes Element des Prüfkopfs kann zur Messung der Korrosion verwendet werden. In einer oder mehreren Ausführungsformen kann derselbe Bereich eines Arrays für Positionsdaten und Messdaten (zum Beispiel Korrosion) verwendet werden. Anhand der durch den Abtastbetrieb des Prüfkopfs 110 ermittelten Positionsdaten sowie der mit dem zweiten Element des Prüfkopfs ermittelten Korrosionsdaten kann ein breitflächiger C-Scan der Korrosion aufgezeichnet werden. Der Gegenstand der Ansprüche ist in dieser Hinsicht jedoch nicht eingeschränkt. In einer oder mehreren Ausführungsformen kann der erste Prüfkopf einen ersten Bereich des Arrays 200 umfassen, und der zweite Prüfkopf kann einen zweiten Bereich des Arrays 200 umfassen. Alternativ kann der erste Prüfkopf ein erstes Array umfassen, und der zweite Prüfkopf kann ein zweites Array umfassen. Der Gegenstand der Ansprüche ist in dieser Hinsicht jedoch nicht eingeschränkt.

In einer oder mehreren alternativen Ausführungsformen können alle oder fast alle Elemente des Arrays gleichzeitig Echos des Signals 512 empfangen und von einzelnen Sensoren 212 und/oder 214 des Arrays 200 empfangen werden. Aus solchen Echosignalen, die zum Beispiel bei unbewegtem Prüfkopf und/oder bei auf der Achse 116 entlang dem Prüfstück 112 bewegtem Prüfkopf von der Korrosion des Merkmals 410 reflektiert werden, kann ein C-Scan erstellt werden. Die C-Scans können zur Ermittlung von Positionskoordinaten mit nachfolgenden Abtastungen verglichen werden, die bei auf der Achse 116 bewegtem Prüfkopf 110 erstellt werden. Hierbei kann zum Beispiel ein ähnliches Verfahren wie bei optischen Mäusen eingesetzt werden. Bei einer solchen Anordnung kann dasselbe Array als Dual-Prüfkopf zur Ermittlung von Positionsdaten und/oder zur Ermittlung von Daten zum Korrosionsmerkmal 510 eingesetzt werden. Der Gegenstand der Ansprüche ist in dieser Hinsicht jedoch nicht eingeschränkt.

In einer oder mehreren Ausführungsformen können die mit dem Prüfkopf 110 ermittelten Abtastdaten optional auf einer Anzeige eines Informationsverarbeitungssystems 114 angezeigt werden, zum Beispiel beim Betrieb des Prüfkopfsystems 100. So kann ein Bild des mit dem Prüfkopf 110 abgetasteten Bereichs auf der Anzeige angezeigt werden (Block 622), so dass der Bediener es sehen und bei der Navigation des Prüfkopfs 110 entlang dem Prüfstück 112 nutzen kann. Die Datei des Prüfstücks 112 kann optional mit Abtastdaten verglichen werden (Block 624), die mit dem Prüfkopf 110 ermittelt wurden. So kann zum Beispiel eine in der CAD-Datei dargestellte elektronische Version des Prüfstücks über ein mit dem Prüfkopf 110 ermitteltes Bild des Prüfstücks 112 gelegt werden, so dass zum Beispiel eine Korrelation zwischen einem Merkmal des Prüfstücks 112 und einer oder mehreren Koordinaten der Position des Prüfkopfs 110 und des Prüfstücks 112 aus der CAD-Datei erfasst werden kann. Es kann ermittelt werden, ob das Prüfstück 112 ein bestimmtes Merkmal, zum Beispiel das Merkmal 510, aufweist (Block 626). Bei diesem Merkmal kann es sich zum Beispiel um einen Fertigungsmangel und/oder einen Fehler, einen Hohlraum, eine Spannung, einen Riss, einen Bruch, eine Schicht, einen Einschluss und/oder - bei metallischen oder ähnlichen Prüfstücken 112 - eine Korrosion handeln. Das Merkmal kann zum Beispiel ermittelt werden, indem der Bediener des Prüfkopfsystems 100 eine Sichtprüfung durchführt, die zumindest teilweise auf einem mit dem Prüfkopf 110 erstellten Bild des Prüfstücks 112 basiert. Alternativ kann das Merkmal zumindest teilweise auf Grundlage einer durch das Informationsverarbeitungssystem 114 ausführbaren Softwareprogrammierung ermittelt werden.

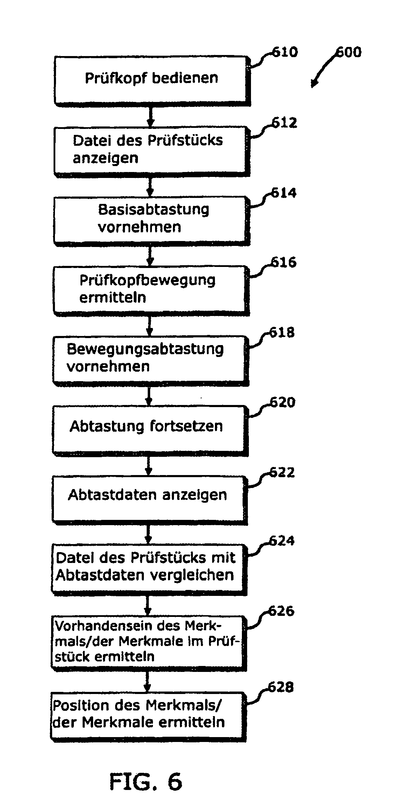

Figur 7 ist ein Blockdiagramm eines Informationsverarbeitungssystems, das mit einem Prüfkopf gemäß einer oder mehrerer Ausführungsformen dieser Erfindung eingesetzt werden kann. Das in Figur 1 und/oder Figur 7 dargestellte Informationsverarbeitungssystem 114 kann eingesetzt werden, um Zugriff auf ein Computerprogramm und/oder eine grafische Benutzeroberfläche zu bieten, indem Hardwarekomponenten bereitgestellt werden, auf denen das Computerprogramm und/oder die grafische Benutzeroberfläche 110 ausgeführt werden kann, um zum Beispiel die Methode 600 aus Figur 6 auszuführen. Ein solches Computerprogramm und/oder solche maschinenlesbare Anweisungen können auf einem computer- und/oder maschinenlesbaren Medium wie einer CD (Compact Disc), einer DVD (Digital Versatile Disc), einem Flash-Speichergerät, einer Festplatte usw. gespeichert sein. Wie in Figur 7 dargestellt wird, kann das Informationsverarbeitungssystem 114 durch den Prozessor 710 gesteuert werden. Der Prozessor 710 kann eine Zentraleinheit wie einen Mikroprozessor oder Mikrocontroller umfassen, der zum Ausführen von Programmen, zum Handhaben von Daten und zum Steuern der Aufgaben des Informationsverarbeitungssystems 114 eingesetzt wird. Die Kommunikation mit dem Prozessor 710 kann über einen Bus 718 implementiert werden, der zur Übertragung von Daten zwischen den Komponenten des Informationsverarbeitungssystems 114 eingesetzt wird. Der Bus 718 kann einen Datenkanal für die Übertragung von Daten zwischen Speicherkomponenten und anderen Peripheriekomponenten des Informationsverarbeitungssystems 718 umfassen. Der Bus 718 kann darüber hinaus eine Gruppe von Signalen bereitstellen, die für die Kommunikation mit dem Prozessor 710 eingesetzt werden, zum Beispiel einen Datenbus, einen Adressbus und/oder einen Steuerbus. Der Bus 718 kann eine Busarchitektur gemäß etablierter Standards wie ISA (Industry Standard Architecture), EISA (Extended Industry Standard Architecture), MCA (Micro Channel Architecture), PCI (Peripheral Component Interconnect) sowie gemäß IEEE-Normen (Institute of Electrical and Electronics Engineers) wie beispielsweise IEEE 488 GPIB (General-Purpose Interface Bus) und IEEE 696/S-100 aufweisen. Der Gegenstand der Ansprüche ist in dieser Hinsicht jedoch nicht eingeschränkt.

Andere Komponenten des Informationsverarbeitungssystems können zum Beispiel Arbeitsspeicher 712 und/oder Hilfsspeicher 714 umfassen. Das Informationsverarbeitungssystem 114 kann darüber hinaus einen Hilfsprozessor 716 aufweisen, bei dem es sich um einen weiteren Prozessor wie zum Beispiel einen Digitalsignalprozessor handeln kann. Der Arbeitsspeicher 712 kann zur Speicherung von Anweisungen und Daten für Programme dienen, die vom Prozessor 710 ausgeführt werden. Beim Arbeitsspeicher 712 kann es sich zum Beispiel um halbleiterbasierten Speicher wie DRAM (Dynamic Random Access Memory) und/oder SRAM (Static Random Access Memory) und/oder Ähnliches handeln. Andere Typen halbleiterbasierten Speichers sind zum Beispiel SDRAM (Synchronous Dynamic Random Access Memory), RDRAM (Rambus Dynamic Random Access Memory) und FRAM (Ferroelectric Random Access Memory). Der Hilfsspeicher 714 kann zum Speichern von Anweisungen und/oder Daten eingesetzt werden, die vor der Ausführung in den Arbeitsspeicher 712 geladen werden. Beim Hilfsspeicher 714 kann es sich um halbleiterbasierten Speicher wie zum Beispiel ROM (Read-Only Memory), PROM (Programmable Read-Only Memory), EPROM (Erasable Programmable Read-Only Memory), EEPROM (Electrically Erasable Read-Only Memory) und/oder Flash-Speicher und/oder blockorientierten Speicher (ähnlich EEPROM) handeln. Beim Hilfsspeicher 714 kann es sich außerdem um nicht halbleiterbasierten Speicher handeln, einschließlich, aber nicht beschränkt auf Magnetband, Trommelspeicher, Diskette, Festplatte, optische Datenträger, Laserdisc, CD-ROM (Compact Disc Read-Only Memory), CD-R (Write Once Compact Disc), CD-RW (Rewritable Compact Disc), DVD-ROM (Digital Versatile Disc Read-Only Memory), DVD-R (Write Once DVD), DVD-RAM (Rewritable Digital Versatile Disc) usw. Es können auch andere Typen von Speichergeräten eingesetzt werden. Das Informationsverarbeitungssystem 114 umfasst optional einen Hilfsprozessor 716, bei dem es sich um einen Hilfsprozessor zur Verwaltung der Eingabe und Ausgabe handeln kann, um einen Hilfsprozessor zur Durchführung von Gleitkommaoperationen, um einen Digitalsignalprozessor und/oder um einen Spezial-Mikroprozessor, dessen Architektur für die schnelle Ausführung von Signalverarbeitungsalgorithmen geeignet ist, um einen nachgeschalteten und/oder dem Prozessor 710 untergeordneten Prozessor, um einen zusätzlichen Mikroprozessor und/oder Controller für Zwei- oder Mehrprozessorsysteme und/oder um einen Coprozessor und/oder um einen zusätzlichen Prozessor. Solche Hilfsprozessoren können diskrete und/oder in dieselbe Baugruppe wie der Prozessor 410 integrierte Prozessoren sein, zum Beispiel in einen Multicore- und/oder Multithread-Prozessor. Der Gegenstand der Ansprüche ist in dieser Hinsicht jedoch nicht eingeschränkt.

Das Informationsverarbeitungssystem 114 kann außerdem Folgendes umfassen: ein Anzeigesystem 720 zum Verbinden der Anzeige 722, einen Eingabe/Ausgabe-Controller 724 zum Verbinden von Eingabe/Ausgabe-Geräten wie zum Beispiel E/A-Gerät 726, E/A-Gerät 728 bis zu einem n-ten E/A-Gerät 730. Das Anzeigesystem 720 kann eine Grafikkarte umfassen, die Komponenten zur Steuerung der Anzeige 722 aufweist, zum Beispiel Grafikspeicher, Pufferspeicher und/oder eine Grafik-Engine. Beim Grafikspeicher kann es sich zum Beispiel um VRAM (Video Random Access Memory), SGRAM (Synchronous Graphics Random Access Memory), WRAM (Windows Random Access Memory) und/oder Ähnliches handeln. Die Anzeige 722 kann Folgendes umfassen: eine Kathodenstrahlröhren-Anzeige wie einen Monitor oder Fernseher und/oder alternative Typen von Anzeigetechnologien wie einen Kathodenstrahlröhren-Projektor, einen LCD-Projektor (Liquid-Crystal Display), eine LCD-Anzeige, eine LED-Anzeige (Light-Emitting Diode), eine Gas- und/oder Plasmaanzeige, eine Elektrolumineszenz-Anzeige, eine Vakuumfluoreszenz-Anzeige, eine Kathodenlumineszenz- und/oder Feldemissions-Anzeige, eine PALC-Anzeige (Plasma Addressed Liquid Crystal), eine HGED-Anzeige (High Gain Emissive Display) und so weiter. Der Eingabe/Ausgabe-Controller 724 kann einen oder mehrere Controller und/oder Adapter umfassen, die Schnittstellenfunktionen für das E/A-Gerät 726, das E/A-Gerät 728 und/oder das E/A-Gerät 730 bereitstellen. Der Eingabe/Ausgabe-Controller 724 kann Folgendes umfassen: einen seriellen Anschluss, einen parallelen Anschluss, einen USB-Anschluss (Universal Serial Bus), einen seriellen IEEE 1394-Busanschluss, einen Infrarotanschluss, einen Netzwerkadapter, einen Druckeradapter, einen Hochfrequenzkommunikations-Adapter, einen UART-Anschluss (Universal Asynchronous Receiver-Transmitter) und/oder ähnliche Komponenten, die eine Schnittstelle zu E/A-Geräten wie folgenden bereitstellen: Tastatur, Maus, Trackball, Touchpad, Joystick, Trackstick, Infrarotwandler, Drucker, Modem, Funkmodem, Balkencode-Lesegerät, CCD-Lesegerät (Charge-Coupled Device), Scanner, CD (Compact Disc), CD-ROM (Compact Disc Read-Only Memory), DVD (Digital Versatile Disc), Video-Aufnahmegerät, TV-Karte, Touchscreen, Eingabestift, elektroakustischer Wandler, Mikrofon, Lautsprecher, Audioverstärker und/oder Ähnliches. Der Eingabe/Ausgabe-Controller 724 und/oder das E/A-Gerät 726, das E/A-Gerät 728 und/oder das E/A-Gerät 730 kann analoge und/oder digitale Signale zur Kommunikation zwischen dem Informationsverarbeitungssystem und externen Geräten, Netzwerken und/oder Informationsquellen bereitstellen und/oder empfangen. Der Eingabe/Ausgabe-Controller 724 und/oder das E/A-Gerät 726, das E/A-Gerät 728 und/oder das E/A-Gerät 730 kann zur Implementierung von Industriestandard-Architekturen dienen, zum Beispiel Ethernet IEEE 802-Standards wie IEEE 802.3 für Breitband- und/oder Basisbandnetzwerke, IEEE 802.3z für Gigabit-Ethernet, IEEE 802.4 für Token-Passing-Busnetzwerke, IEEE 802.5 für Token-Ring-Netzwerke, IEEE 802.6 für Mittelbereichsnetzwerke (Metropolitan Area Network, MAN) und/oder Ähnliches, Fiber-Channel, DSL (Digital Subscriber Line), ADSL (Asymmetric Digital Subscriber Line), Frame-Relay, ATM (Asynchronous Transfer Mode), ISDN (Integrated Digital Services Network), PCS (Personal Communications Services), TCP/IP (Transmission Control Protocol/Internet Protocol), SLIP/PPP (Serial Line Internet Protocol/Point-to-Point Protocol) und so weiter. Das Informationsverarbeitungssystem 114 in Figur 7 ist nur ein Beispiel für ein Informationsverarbeitungssystem und/oder eine Computerplattform. Der Gegenstand der Ansprüche ist in dieser Hinsicht nicht eingeschränkt.

Die obige Darlegung beschreibt das Sensor-Array für die Navigation auf Oberflächen und/oder viele seiner Vorteile. Da es sich bei der hier beschriebenen Form jedoch lediglich um eine der Erläuterung dienende Ausführungsform handelt, ist ersichtlich, dass verschiedene Änderungen an der Form, der Bauweise und/oder der Anordnung der Komponenten vorgenommen werden können, ohne den Gegenstand und/oder Umfang der Ansprüche zu verlassen und ohne die grundlegenden Vorteile zu verlieren.

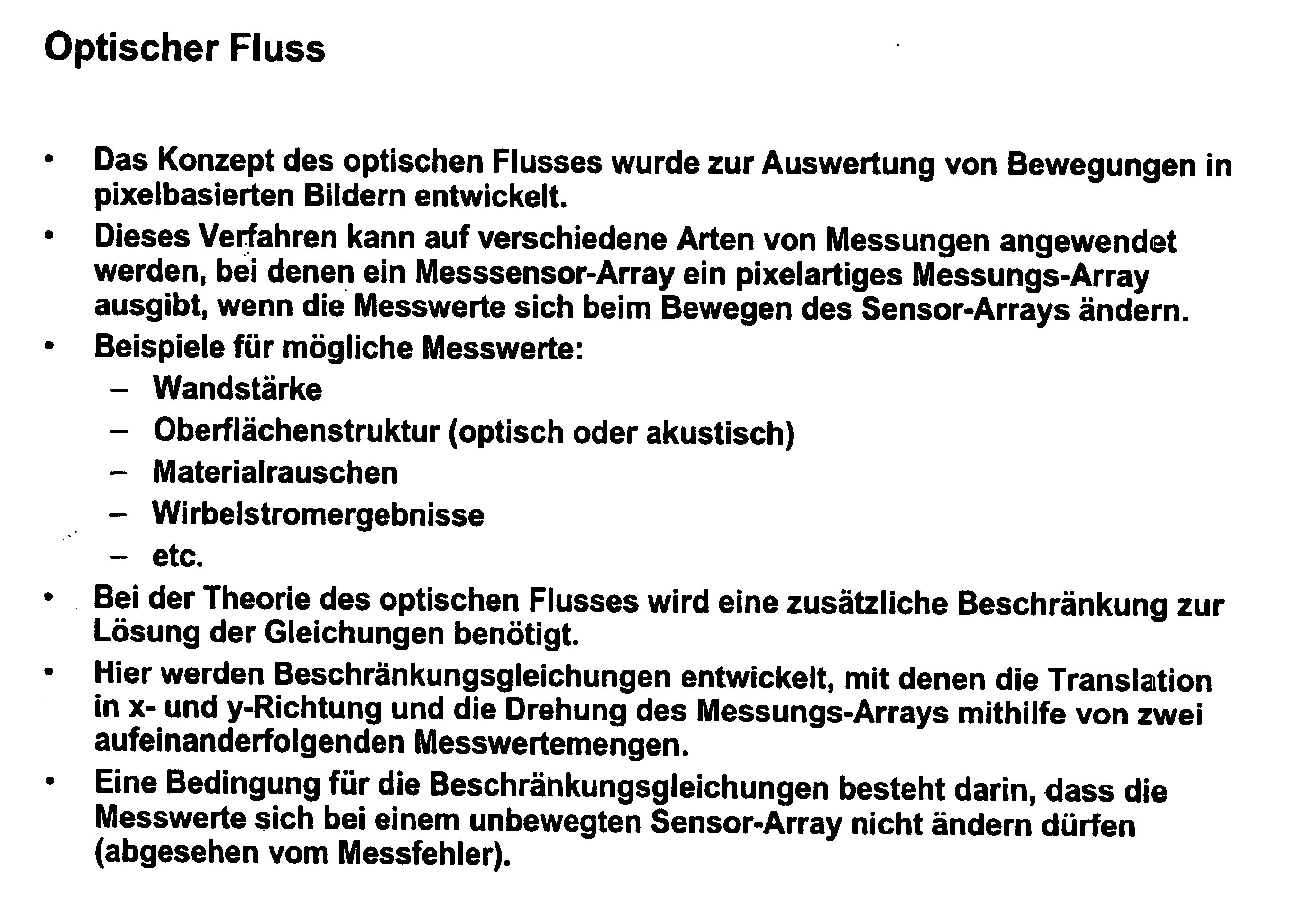

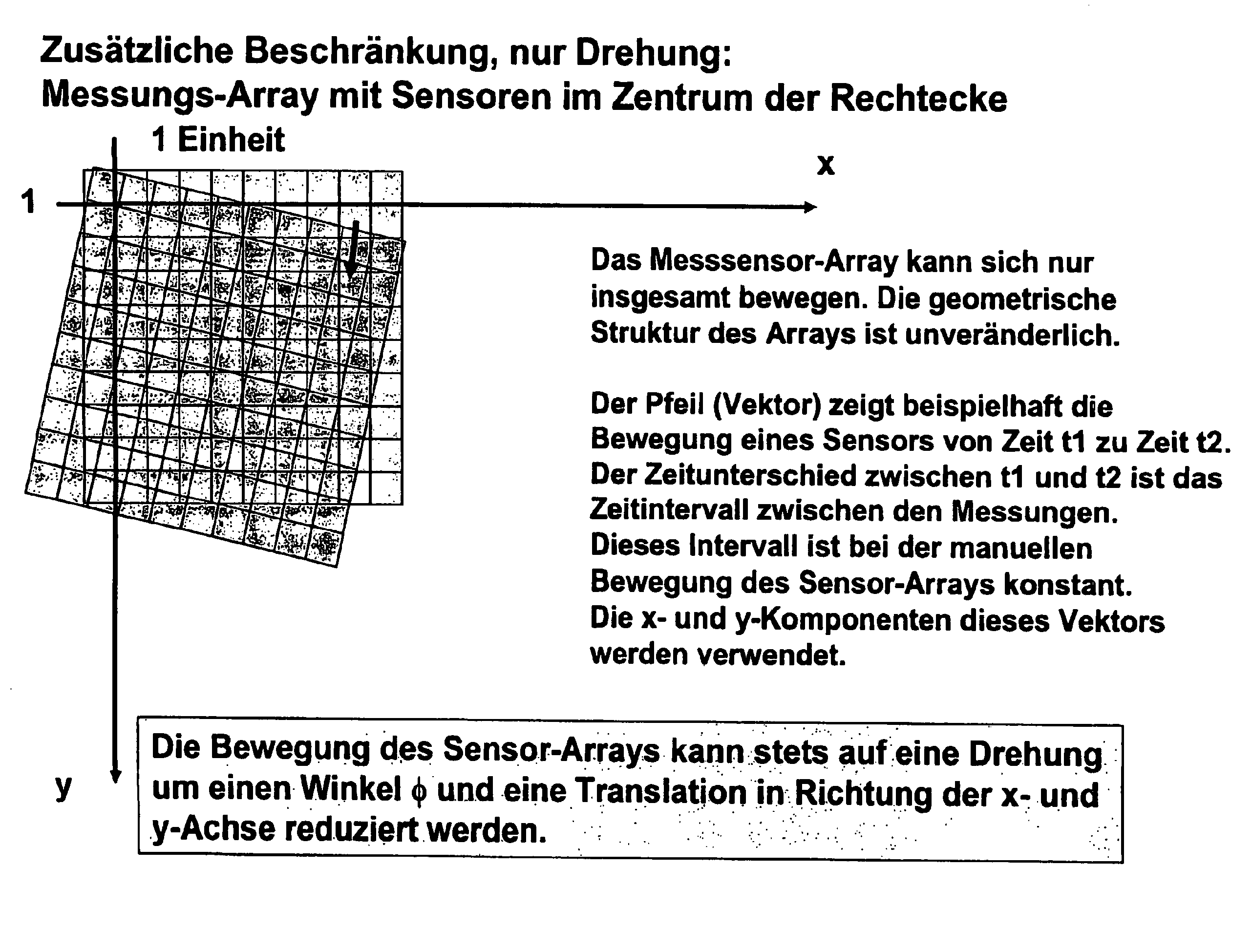

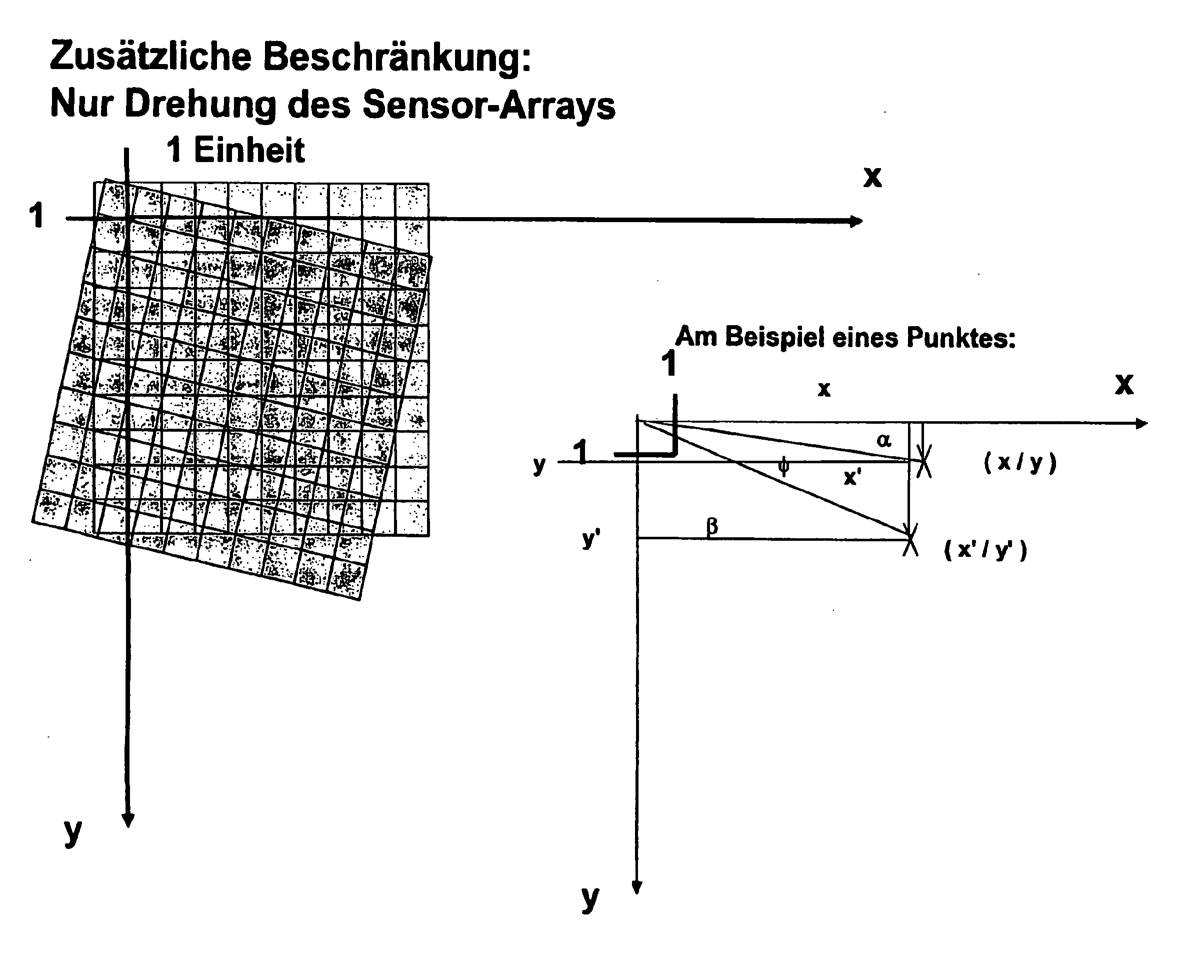

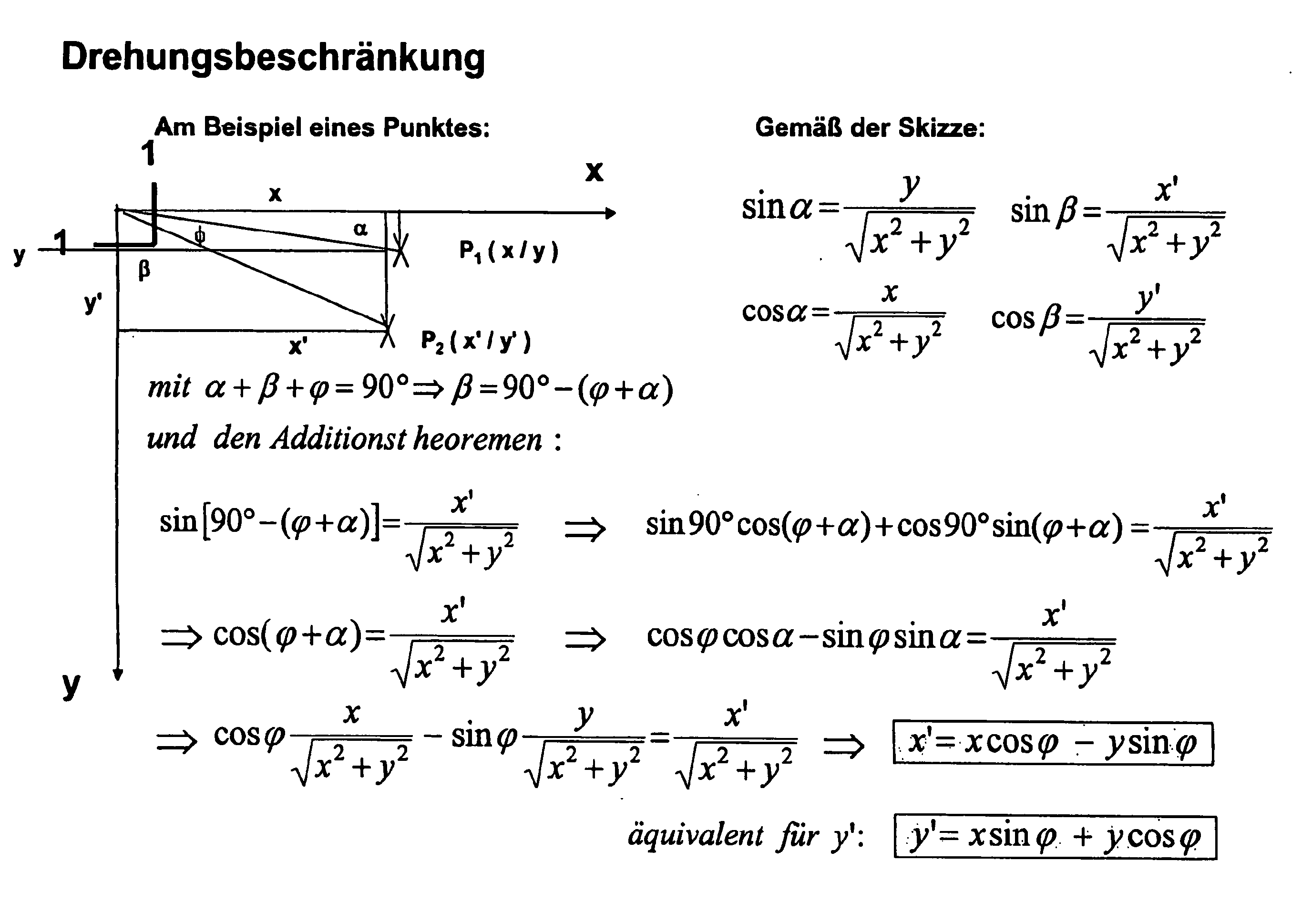

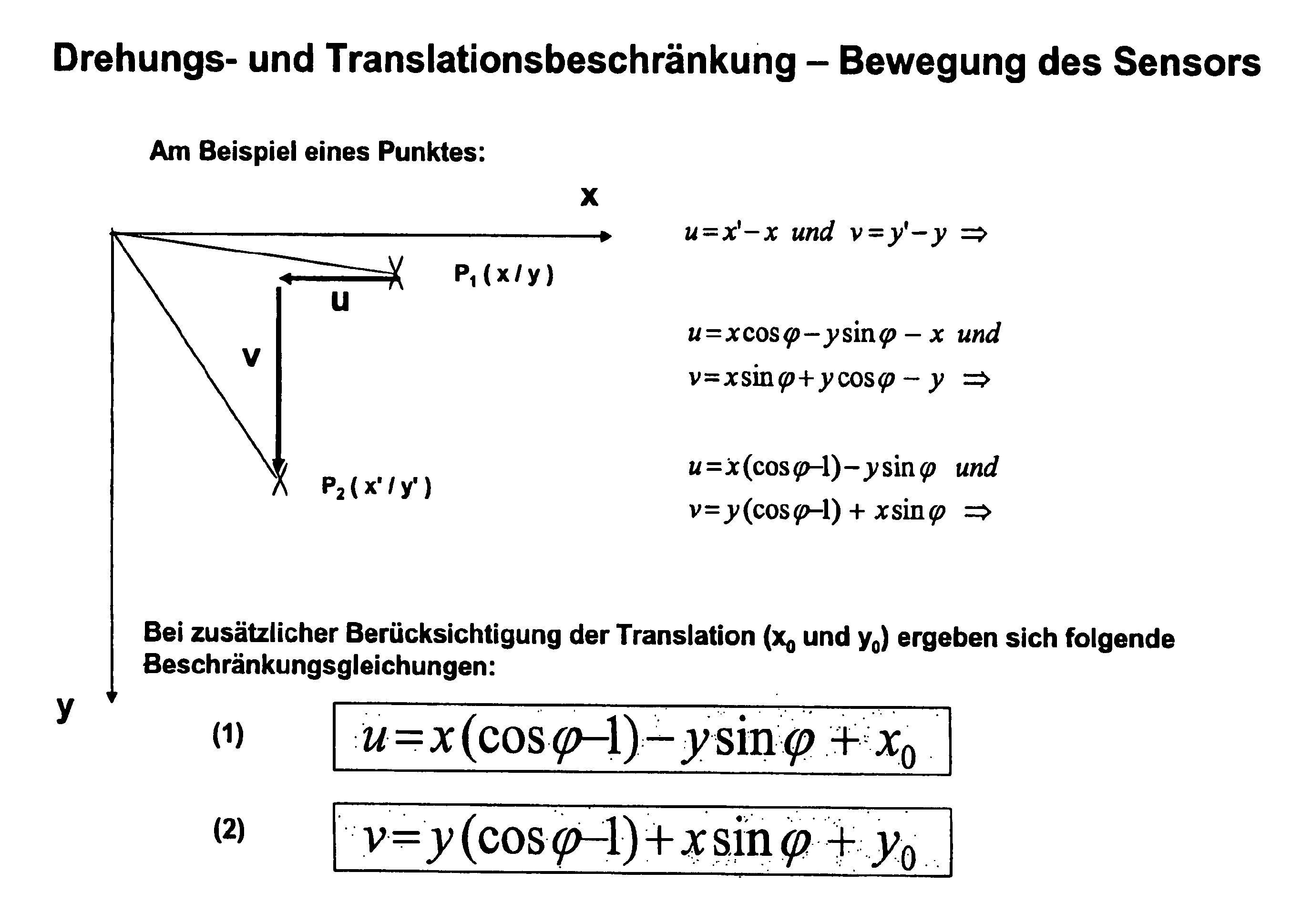

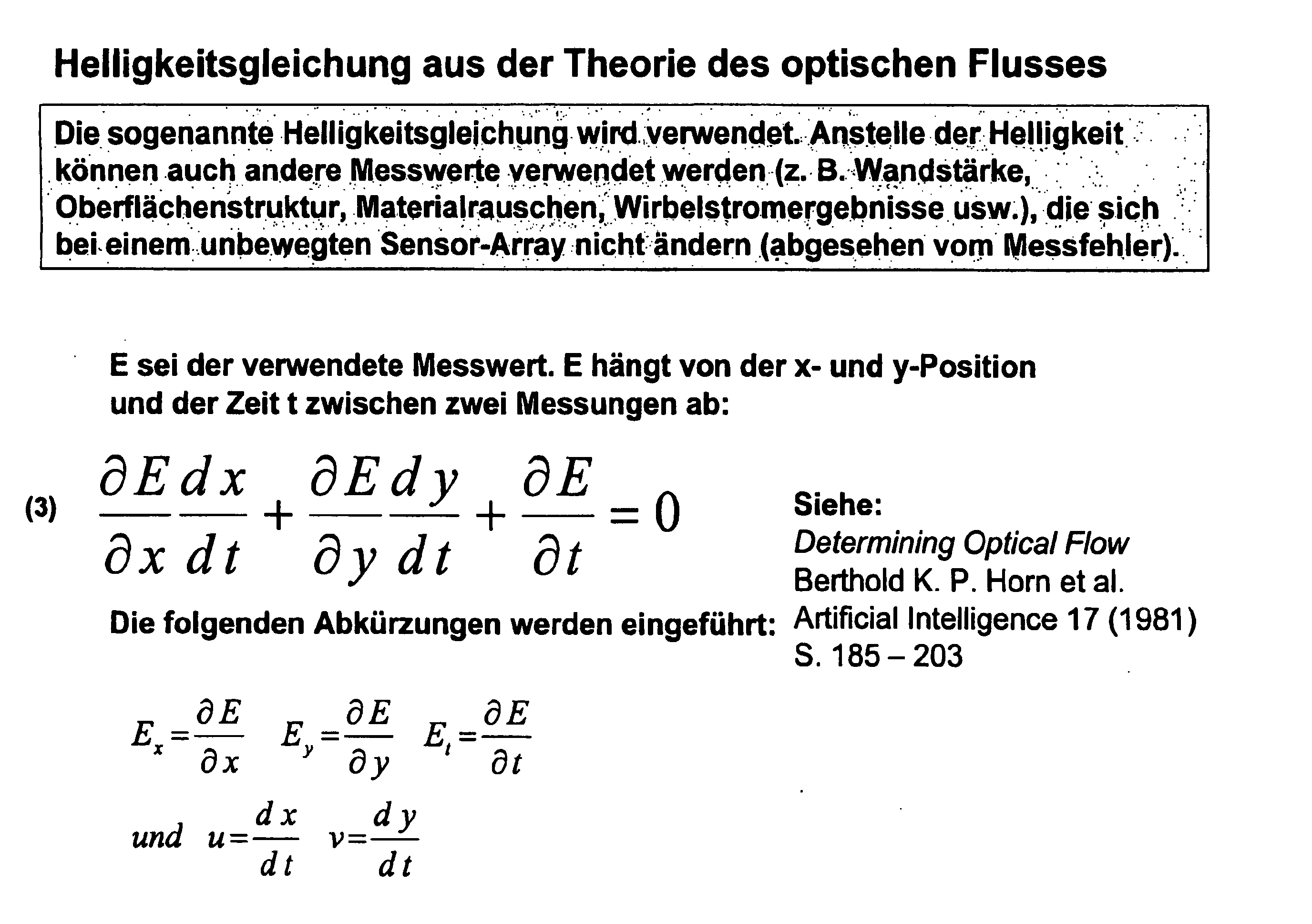

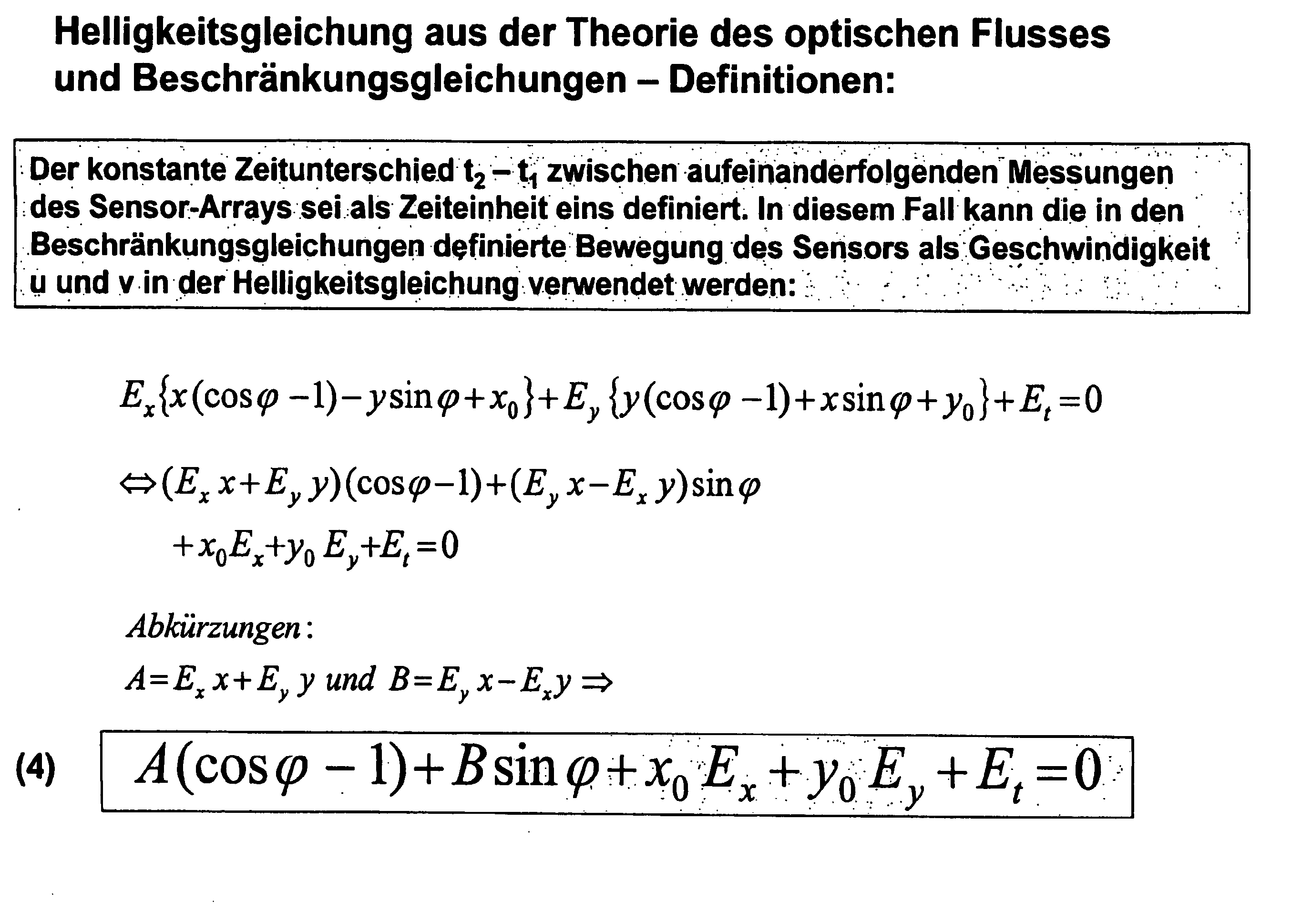

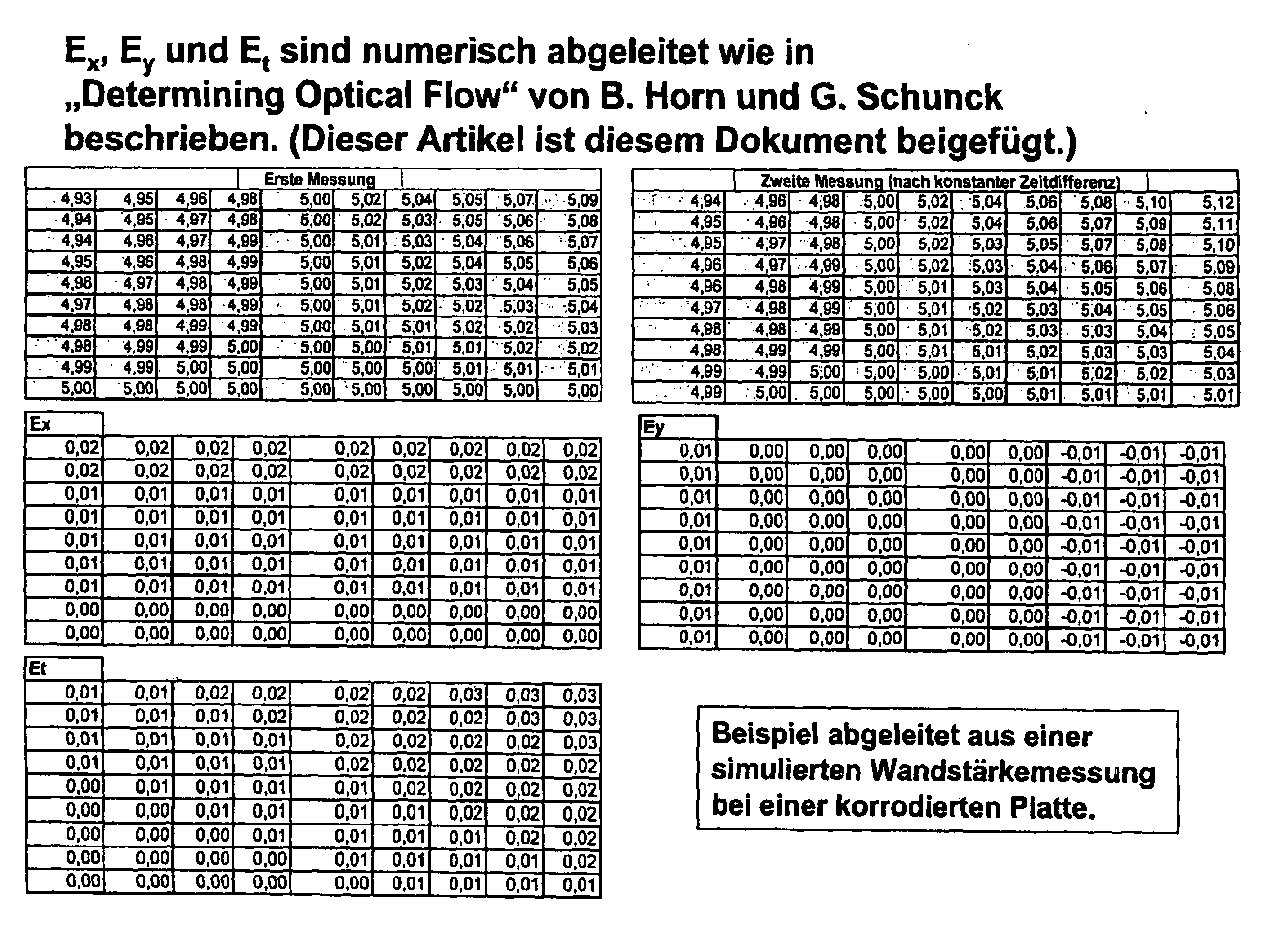

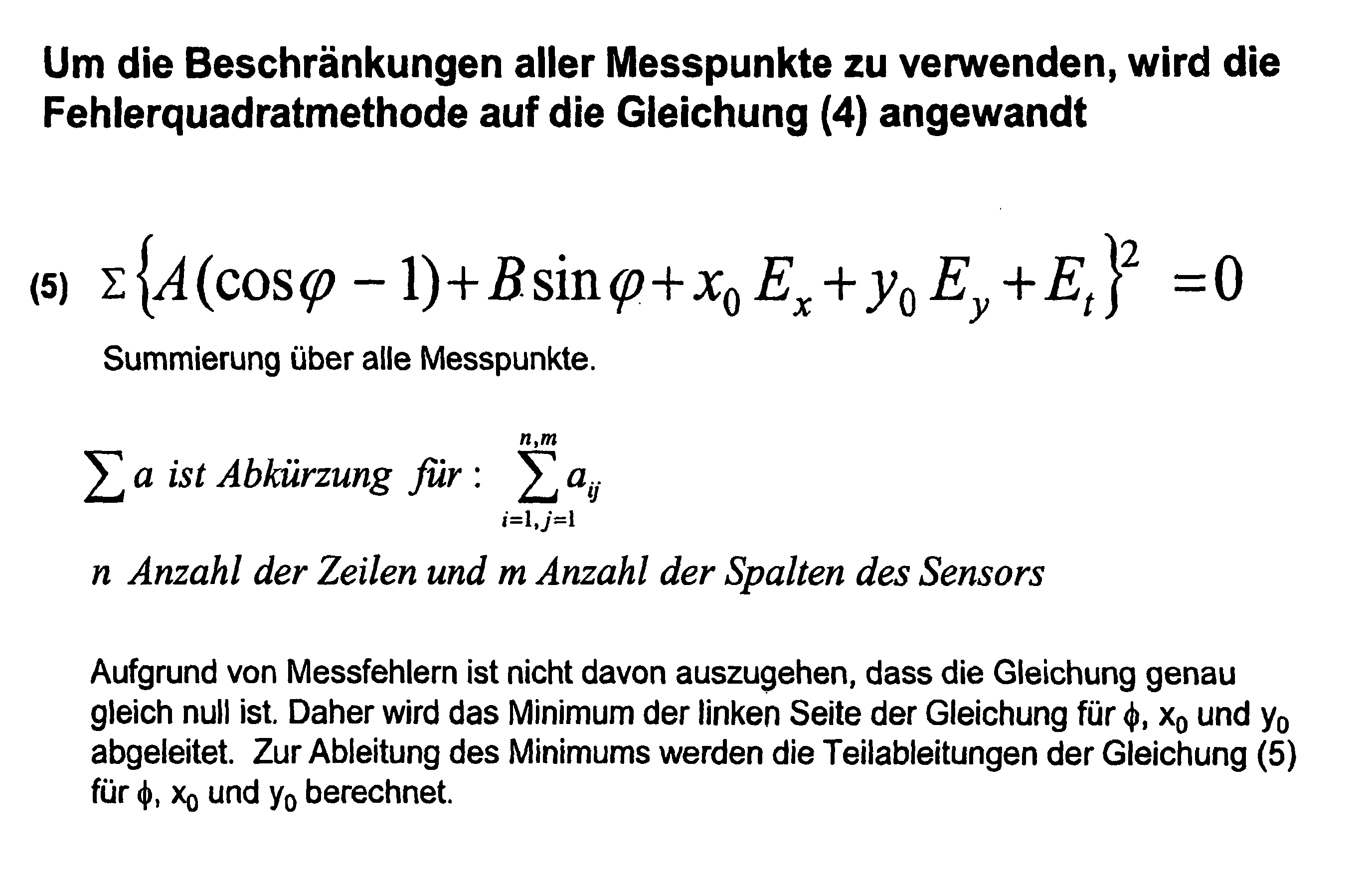

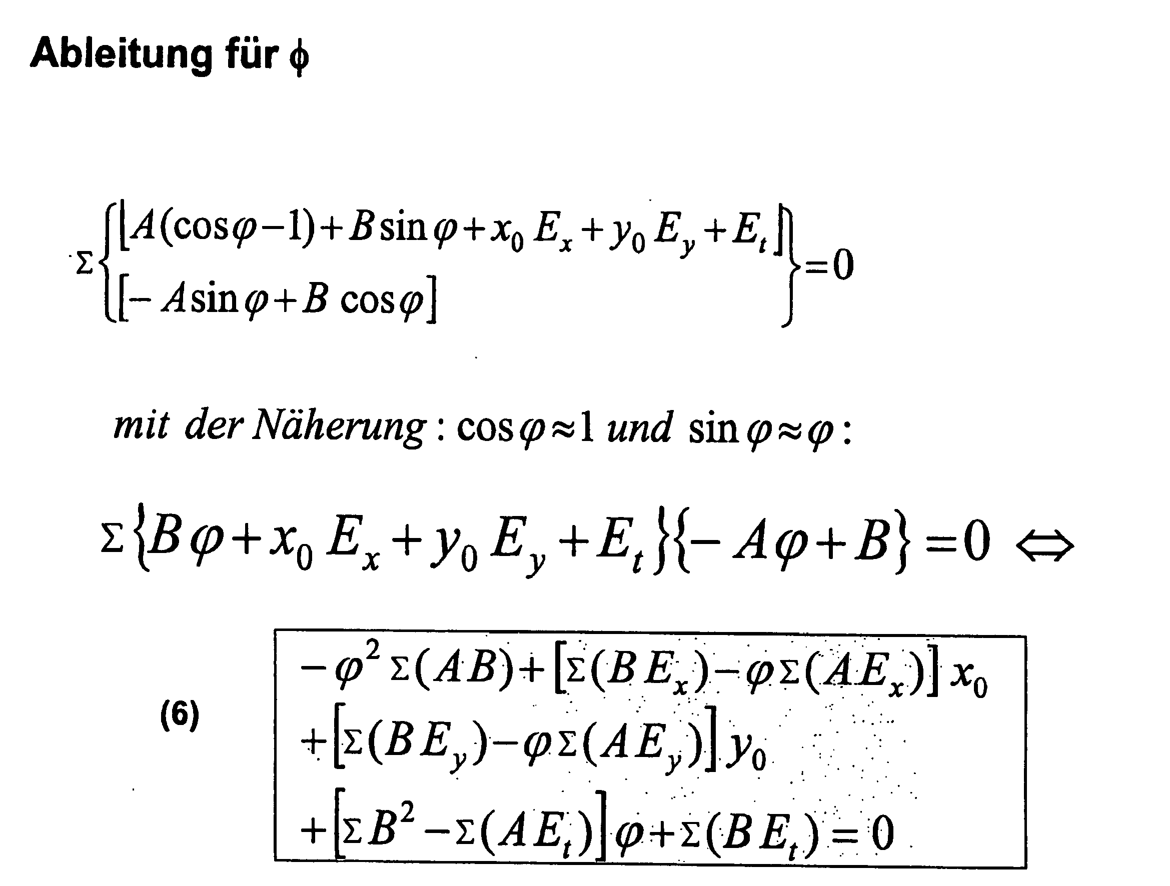

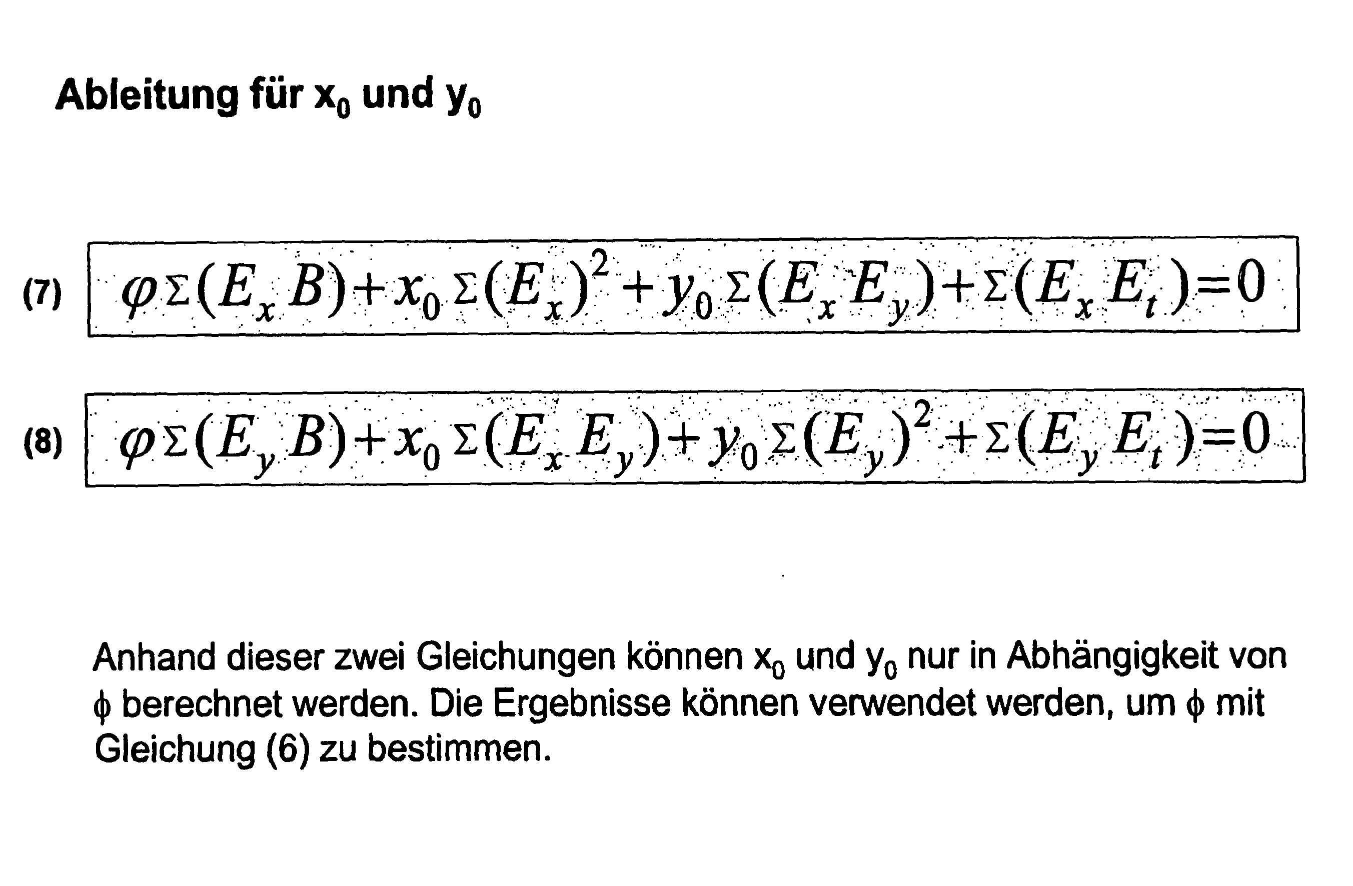

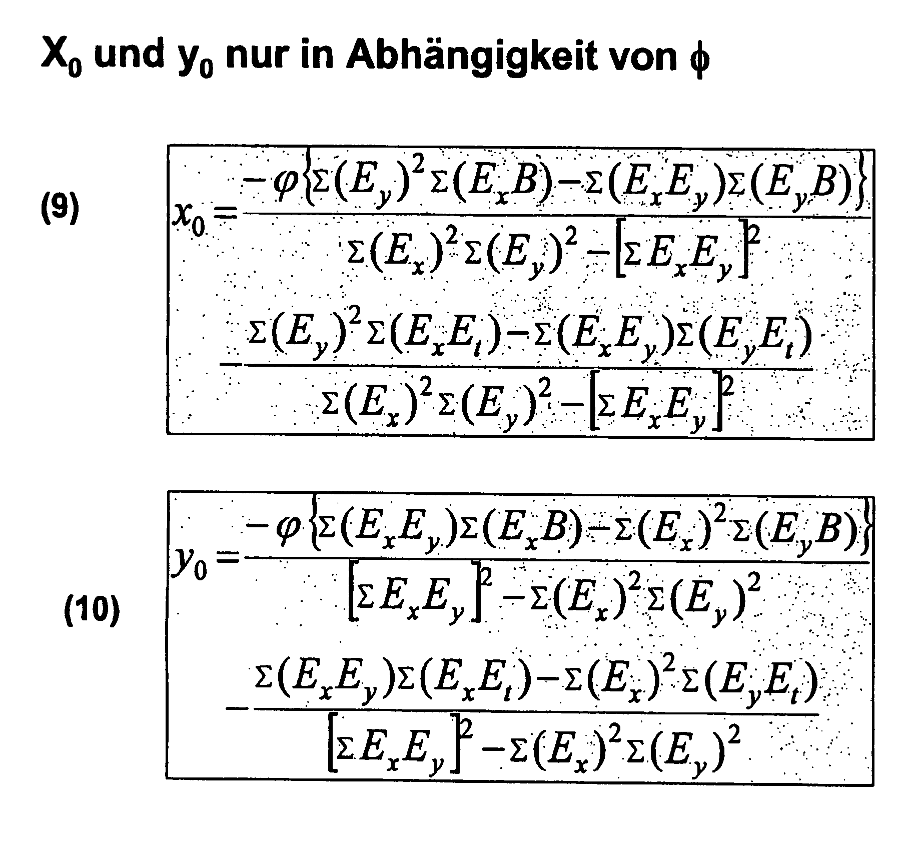

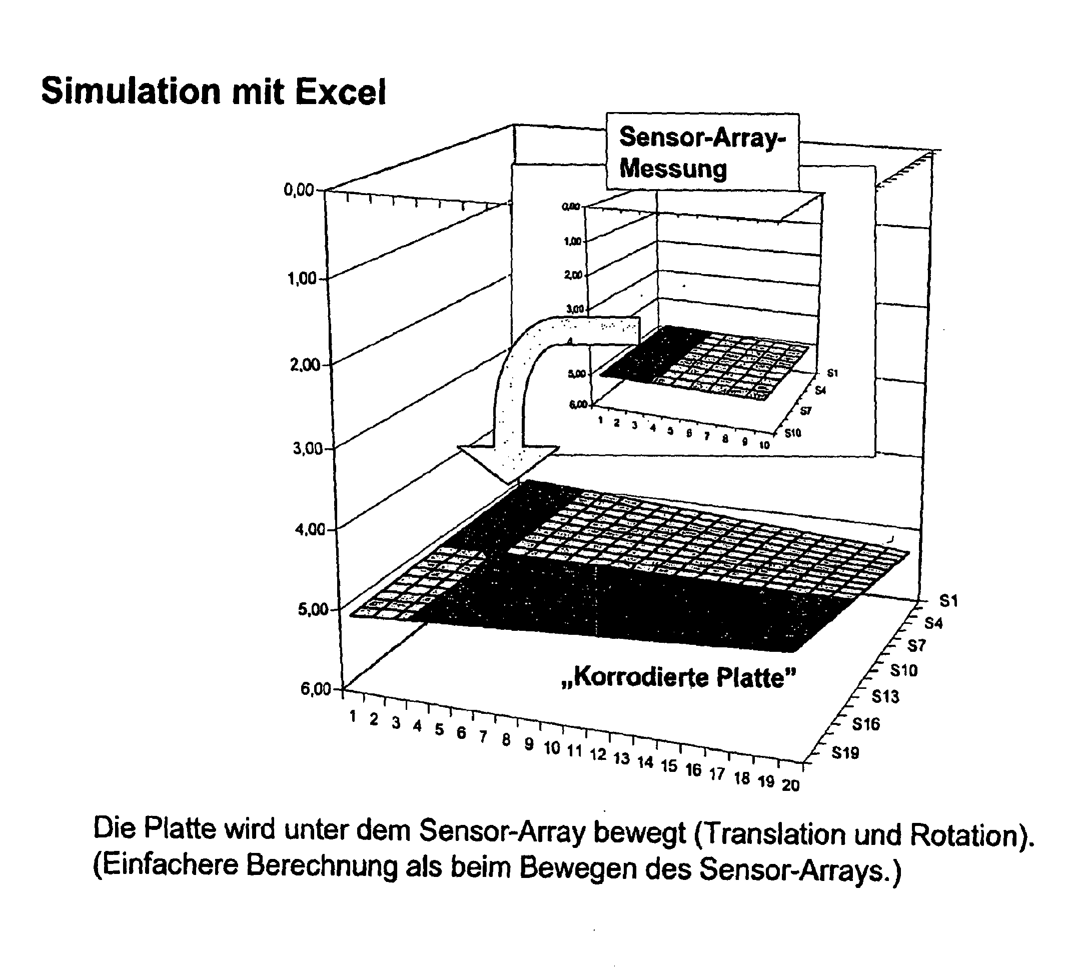

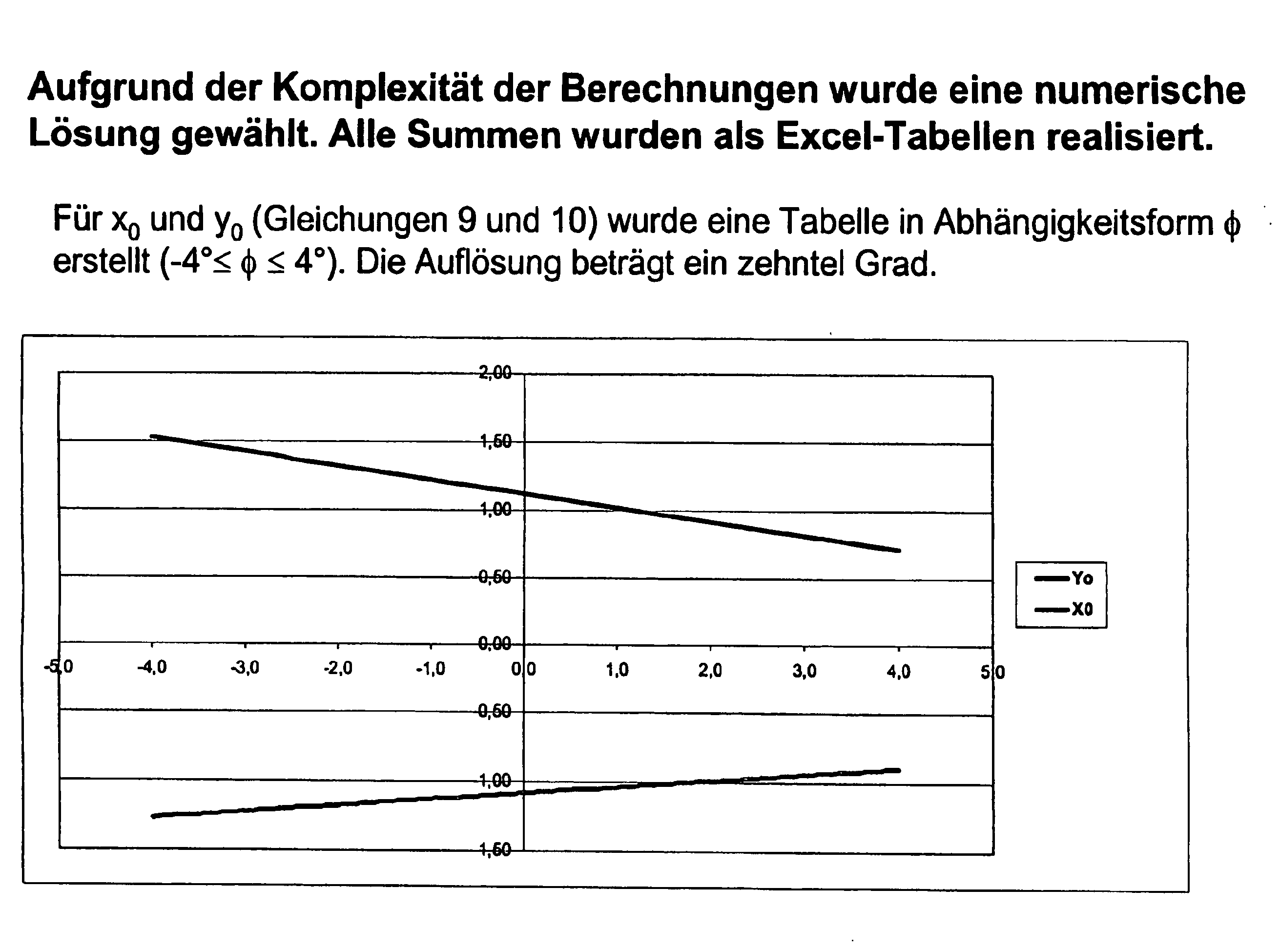

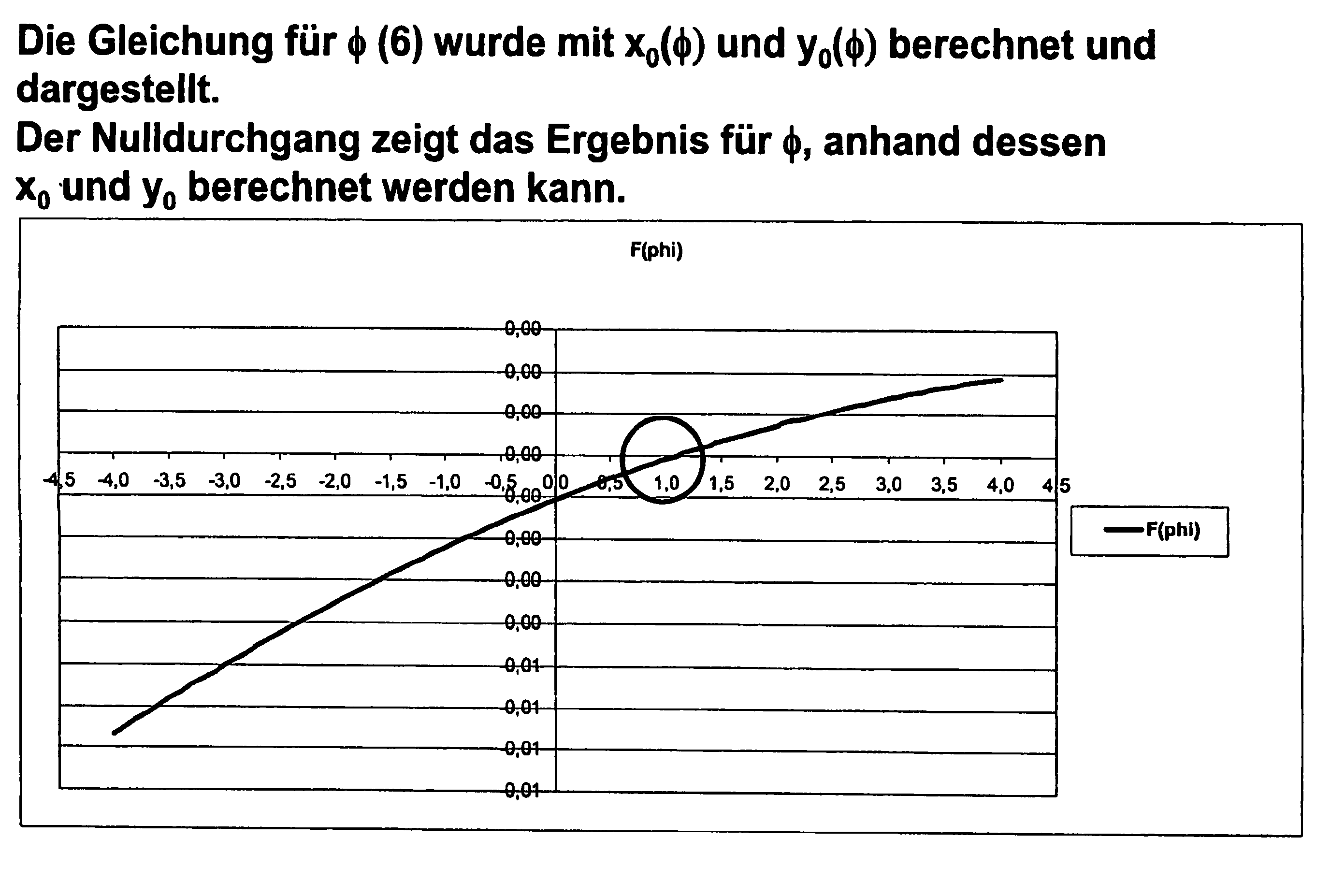

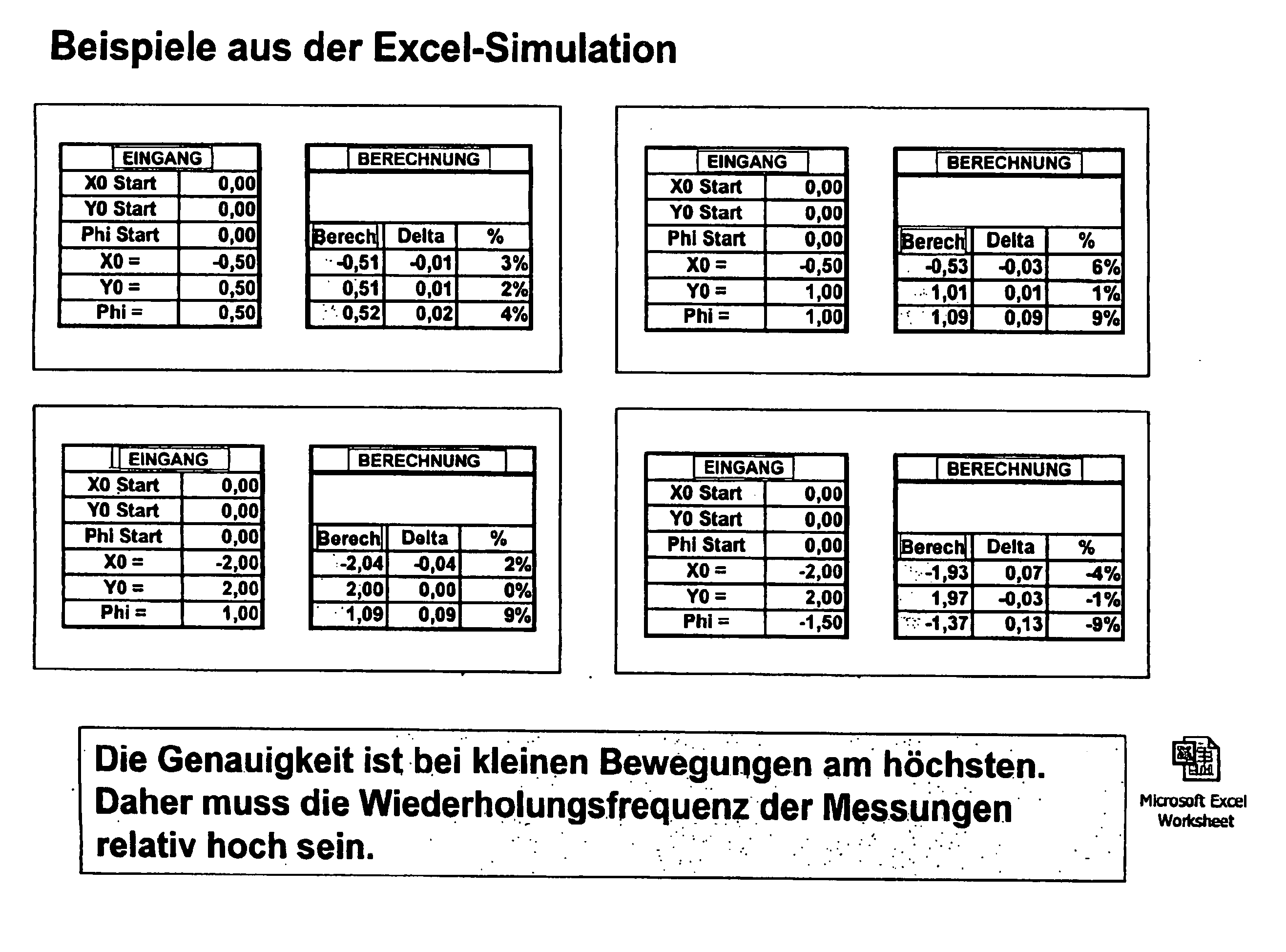

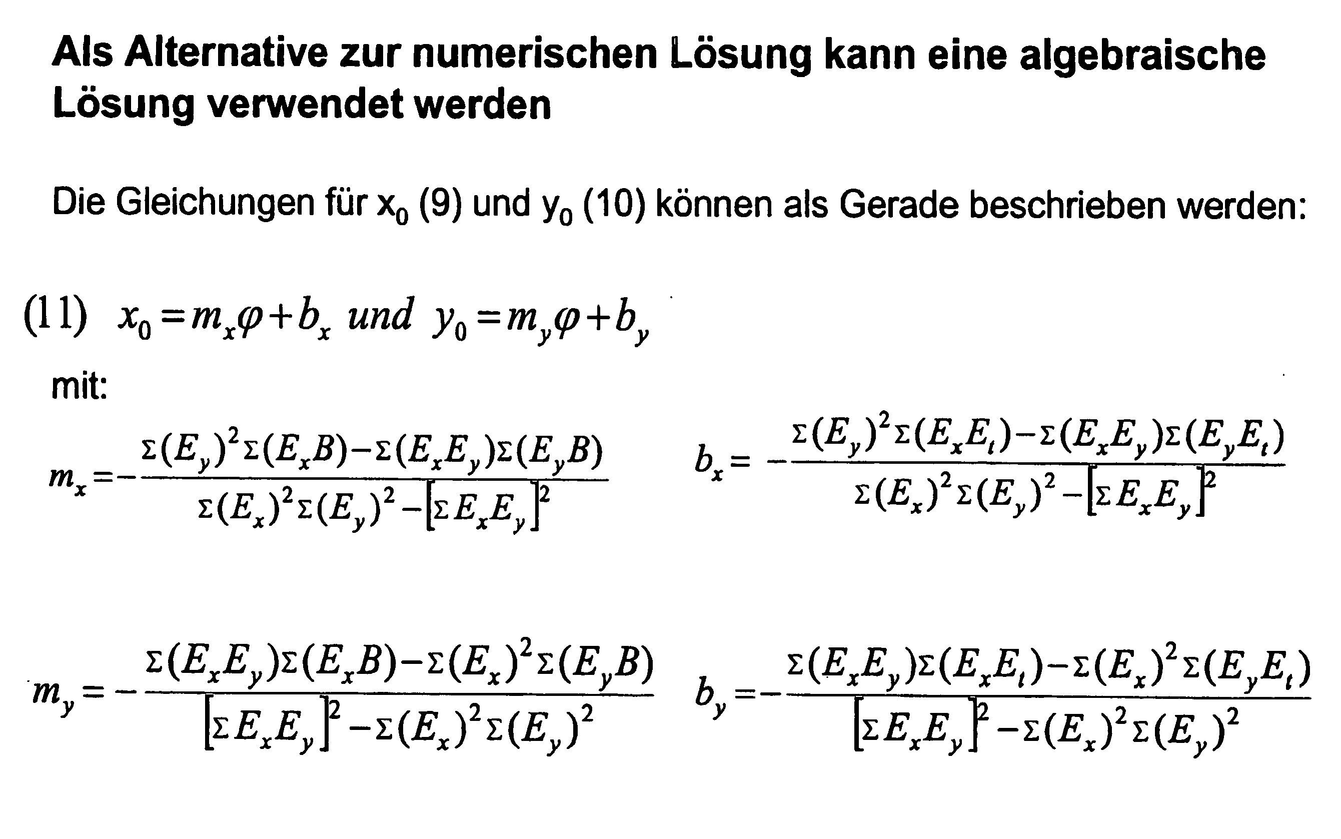

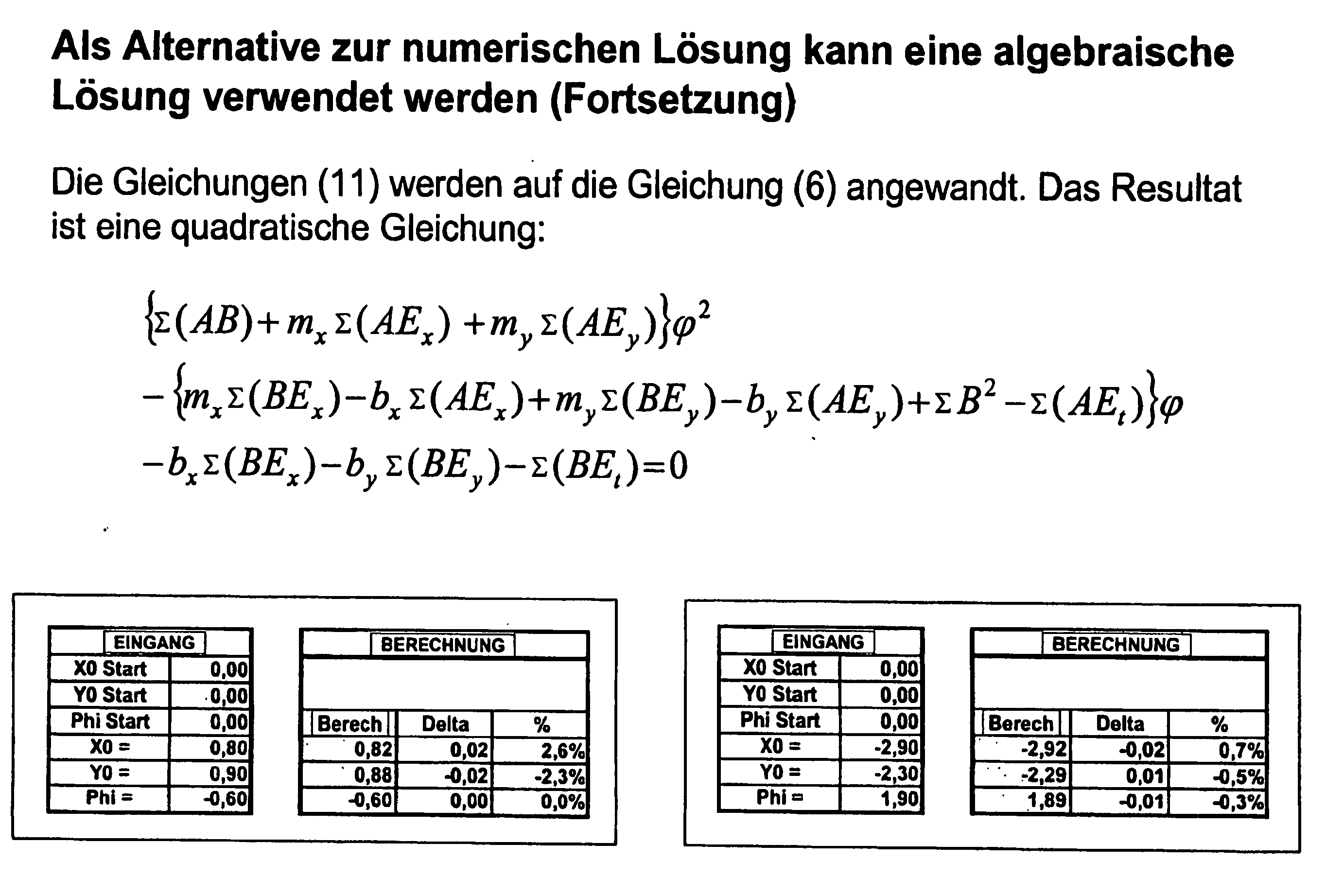

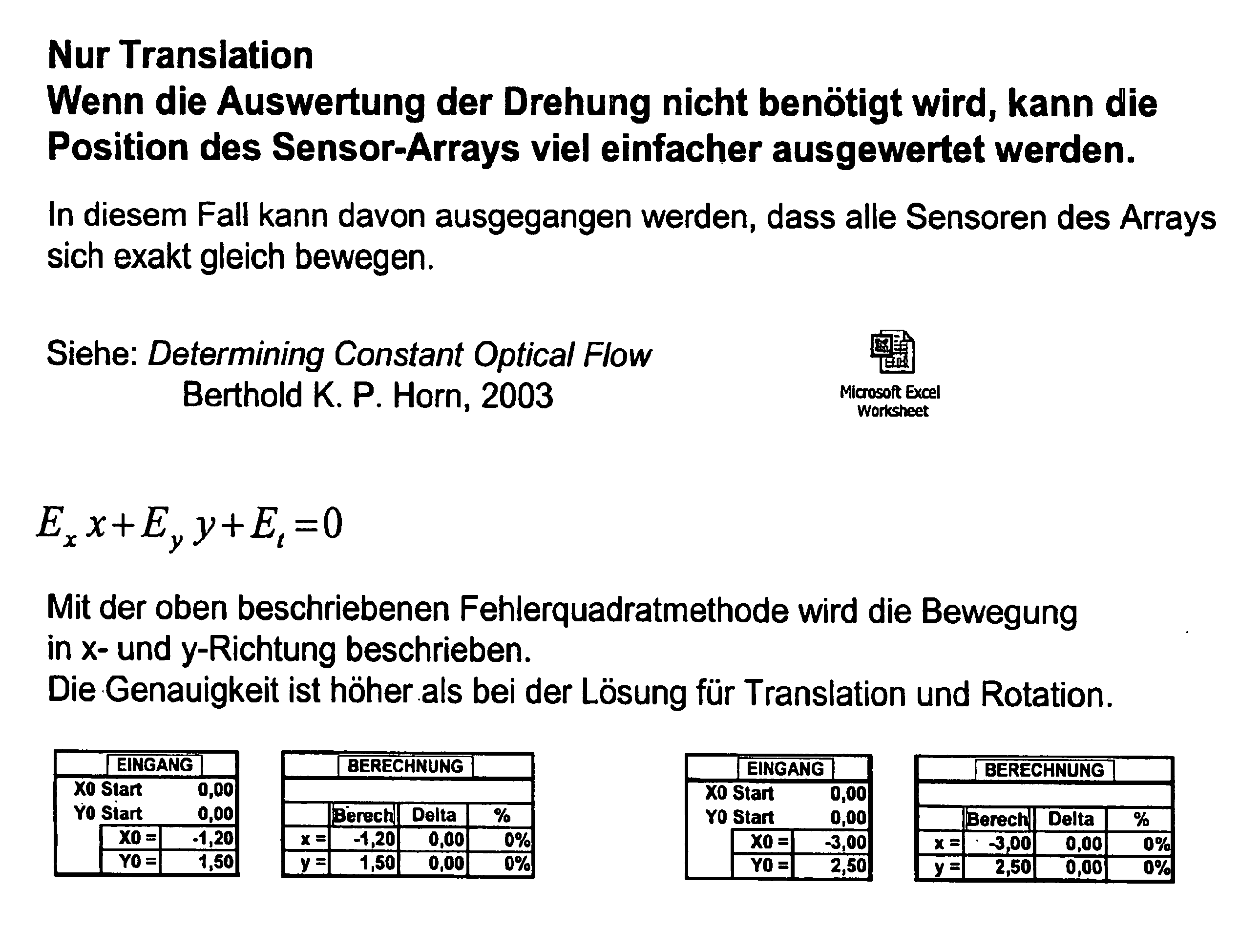

## Patentansprüche

1. Vorrichtung zur zerstörungsfreien Erfassung einer Drehbewegung eines Arrays (200) auf der Oberfläche eines Prüflings (112), die folgenden Merkmale umfassend:
a. einen Sender (212/214), der dazu eingerichtet ist, eine zeitliche Folge von Anregungssignalen SI auszusenden, welche zumindest teilweise In den Prüfling (112) eindringen und mit diesem wechselwirken,
b. ein Array (200) bestehend aus einer Mehrzahl von Empfängern (212/214), die dazu eingerichtet sind, Echosignale zu empfangen, die aus der Wechselwirkung der vom Sender (212/214) ausgesendeten Anregungssignale Si mit dem Prüfling. (112) resultieren, **dadurch gekennzeichnet, dass** die von den Empfängern (212/214) aufgenommenen Echosignale zu einem Anregungssignal Si einen Satz M(Si) von Messwerten bilden,
c. eine Auswerteeinheit, die dazu eingerichtet ist, aus einer Mehrzahl von Messwertsätzen M(SI), die mit zeitlich aufeinander folgenden Anregungssignalen Si korreliert sind, eine Drehbewegung des Arrays (200) auf der Oberfläche zu bestimmen.

2. Vorrichtung gemäß Anspruch 1, **dadurch gekennzeichnet, dass** die Anregungssignale so geartet sind, dass sie mit strukturellen Eigenschaften des Prüflings (112) wechselwirken wie z.B. der geometrischen Struktur einer Grenzfläche des Prüflings (112) oder einer Materialinhomogenität im Volumen des Prüflings (112).

3. Vorrichtung gemäß Anspruch 1, **dadurch gekennzeichnet, dass** zumindest ein Empfänger (212/214) so ausgebildet ist, dass er auch als Sender zum Aussenden der zeitlichen Folge von Anregungssignalen Sibetrieben werden kann.

4. Vorrichtung gemäß Anspruch 1, **dadurch gekennzeichnet, dass** es sich bei den Empfängern (212/214) um Ultraschallempfänger, Wirbelstromsensoren, piezoelektrische Sensoren, Magnetfeldsensoren oder um Sensoren für elektromagnetische Strahlung handelt.

5. Vorrichtung gemäß Anspruch 3, **dadurch gekennzeichnet, dass** die Anregungssignale SI jeweils von einer Mehrzahl von Empfängern (212/214) des Arrays (200) erzeugt werden.

6. Vorrichtung gemäß Anspruch 1, **dadurch gekennzeichnet, dass** die Auswerteeinheit weiterhin dazu eingerichtet ist, aus der Mehrzahl von Messwertsätzen M(Si) eine translatorische Bewegung des Arrays auf der Oberfläche des Prüflings (112) zu bestimmen.

7. Prüfeinheit zur ortsaufgelösten Bestimmung einer strukturellen Eigenschaft eines Prüflings (112), eine Vorrichtung gemäß Anspruch 1 umfassend, wobei die Prüfeinheit dazu eingerichtet ist, aus den von der Vorrichtung erfassten Bewegungsdaten sowie den Messwertsätzen M(SI) ein Abbild der räumlichen Verteilung der strukturellen Eigenschaft des Prüflings (112) zu erzeugen.

8. Prüfeinheit gemäß Anspruch 7, **dadurch gekennzeichnet, dass** die Bewegungsdaten sowohl die rotatorische als auch die translatorische Bewegung des Arrays (200) auf der Oberfläche des Prüflings (112) betreffen.

9. Verfahren zur zerstörungsfreien Erfassung einer Drehbewegung eines Arrays (200) auf der Oberfläche eines Prüflings (112), die folgenden Verfahrensschritte aufweisend:
a. Aussenden einer zeitlichen Folge von Anregungssignalen Si, welche zumindest teilweise in den Prüfling (112), eindringen und mit diesem wechselwirken,
b. Empfangen von Echosignalen, die aus der Wechselwirkung der ausgesendeten Anregungssignale Si mit dem Prüfling (112), resultieren, mittels eines Arrays (200) bestehend aus einer Mehrzahl von Empfängern (212/214), **dadurch gekennzeichnet, dass** die von den Empfängern (212/214) aufgenommenen Echosignale zu einem Anregungssignal Si einen Satz M(Si) von Messwerten bilden,
c. Bestimmen einer Drehbewegung des Arrays (200) auf der Oberfläche des Prüflings (112), aus einer Mehrzahl von Messwertsätzen M(Si), die mit zeitlich aufeinander folgenden Anregungssignalen Si korreliert sind.

10. Verfahren gemäß Anspruch 9, **dadurch gekennzeichnet, dass** die Anregungssignale so geartet sind, dass sie mit strukturellen Eigenschaften des Prüflings (112), wechselwirken wie z.B. der geometrischen Struktur einer Grenzfläche des Prüflings (112), oder einer Materialinhomogenität im Volumen des Prüflings (112).

11. Verfahren gemäß Anspruch 9, **dadurch gekennzeichnet, dass** zumindest ein Empfänger (212/214) so ausgebildet ist, dass er auch als Sender zum Aussenden der zeitlichen Folge von Anregungssignalen Sibetrieben werden kann.

12. Verfahren gemäß Anspruch 9, **dadurch gekennzeichnet, dass** es sich bei den Empfängern (212/214) um Ultraschallempfänger, Wirbeistromsensoren, piezoelektrische Sensoren, Magnetfeldsensoren oder um Sensoren für elektromagnetische Strahlung handelt.

13. Verfahren gemäß Anspruch 11, **dadurch gekennzeichnet, dass** die Anregungssignale Si jeweils von einer Mehrzahl von Empfängern (212/214) des Arrays (200) erzeugt werden.

14. Verfahren gemäß Anspruch 9, durch folgenden weiteren Verfahrensschritt **gekennzeichnet**:
d. Bestimmen einer translatorischen Bewegung des Arrays (200) auf der Oberfläche des Prüflings (112) aus der Mehrzahl von Messwertsätzen M(Si).

15. Verfahren gemäß Anspruch 9, durch folgenden weiteren Verfahrensschritt **gekennzeichnet**:
d. Erzeugen eines Abbilds der räumlichen Verteilung der strukturellen Eigenschaft des Prüflings (112) aus den bestimmten Bewegungsdaten sowie Messwertsätzen M(Si).

16. Verfahren gemäß Anspruch 15, **dadurch gekennzeichnet, dass** die Bewegungsdaten sowohl die rotatorische als auch die translatorische Bewegung des Arrays (200) auf der Oberfläche des Prüflings (112) betreffen.

## Claims

1. An apparatus for nondestructive sensing evaluation of a movement of rotation of an array (200) on the surface of an article being inspected (112), said apparatus comprising the following features:
a. a transmitter (212/214) devised to emit a chronological sequence of excitation signals Si, which at least partially penetrate into said article being inspected (112) and interact therewith,
b. an array (200) consisting of a plurality of receivers (212/214) devised to receive echo signals resulting from the interaction of the excitation signals Si emitted by the transmitter (212/214) with the article being inspected (112), **characterized in that** the echo signals received by the receivers (212/214) form a set M(Si) of measured values with respect to an excitation signal Si,
c. an evaluation unit devised to determine a movement of rotation of the array (200) on the surface from a plurality of measured value sets M(Si) which are correlated with excitation signals Si that are following each other in time.

2. The apparatus as set forth in claim 1, **characterized in that** the excitation signals are natured so as to interact with structural properties of the article being inspected (112) such as e.g., with the geometrical structure of an interface of the article being inspected (112) or with a material inhomogeneity in the volume of the article being inspected (112).

3. The apparatus as set forth in claim 1, **characterized in that** at least one receiver (212/214) is configured so that it may also be operated as a transmitter for emitting the chronological sequence of excitation signals Si.

4. The apparatus as set forth in claim 1, **characterized in that** the receivers (212/214) are ultrasonic receivers, eddy-current sensors, piezoelectric sensors, magnetic field sensors or sensors for electromagnetic radiation.

5. The apparatus as set forth in claim 3, **characterized in that** the excitation signals Si are each generated by a plurality of receivers (212/214) of the array (200).

6. The apparatus as set forth in claim 1, **characterized in that** the evaluation unit is further devised to determine from the plurality of measured value sets M(Si) a movement of translation of the array on the surface of the article being inspected (112).

7. An inspection unit for space-resolved determination of a structural property of an article being inspected (112), incorporating an apparatus as set forth in claim 1, said inspection unit being devised to generate from the movement data acquired by the apparatus as well as from the measured value sets M(Si) an image of the spatial distribution of the structural property of the article being inspected (112).

8. The inspection unit as set forth in claim 7, **characterized in that** the movement data concern both the movement of rotation and the movement of translation of the array (200) on the surface of the article being inspected (112).

9. A method for nondestructive sensing evaluation of a movement of rotation of an array (200) on the surface of an article being inspected (112), said method comprising the following method steps:
a. emitting a chronological sequence of excitation signals Si, which at least partially penetrate into said article being inspected (112) and interact therewith,
b. receiving echo signals resulting from the interaction of the emitted excitation signals Si with the article being inspected (112) by means of an array (200) consisting of a plurality of receivers (212/214), **characterized in that** the echo signals received by the receivers (212/214) form a set M(Si) of measured values with respect to an excitation signal Si,
c. determining a movement of rotation of the array (200) on the surface of the article being inspected (112) from a plurality of sets M(Si) of measured values that are correlated with excitation signals Si that are following each other in time.

10. The method as set forth in claim 9, **characterized in that** the excitations signals are natured so as to interact with structural properties of the article being inspected (112) such as e.g., with the geometrical structure of an interface of the article being inspected (112) or with a material inhomogeneity in the volume of the article being inspected (112).

11. The method as set forth in claim 9, **characterized in that** at least one receiver (212/214) is configured so that it may also be operated as a transmitter for emitting the chronological sequence of excitation signals Si.

12. The method as set forth in claim 9, **characterized in that** the receivers (212/214) are ultrasonic receivers, eddy-current sensors, piezoelectric sensors, magnetic field sensors or sensors for electromagnetic radiation.

13. The method as set forth in claim 11, **characterized in that** the excitation signals Si are each generated by a plurality of receivers (212/214) of the array (200).

14. The method as set forth in claim 9, **characterized by** the following, additional method step:
d. determining from the plurality of measured value sets M(Si) a movement of translation of the array (200) on the surface of the article being inspected (112).

15. The method as set forth in claim 9, **characterized by** the following, additional method step:
d. generating an image of the spatial distribution of the structural property of the article being inspected (112) from the determined movement data as well as from the measured value sets M(Si).

16. The method as set forth in claim 15, **characterized in that** the movement data concern both the movement of rotation and the movement of translation of the array (200) on the surface of the article being inspected (112).

## Revendications

1. Dispositif de détection non destructive d'un mouvement de rotation d'un réseau (200) sur la surface d'une éprouvette (112), comprenant les caractéristiques suivantes :
a. un émetteur (212/214) adapté pour émettre une suite chronologique de signaux d'excitation Si qui pénètrent au moins en partie dans ladite éprouvette (112) et entrent en interaction avec celle-ci,
b. un réseau (200) se composant d'une pluralité de récepteurs (212/214) adaptés pour recevoir des signaux d'écho qui résultent de l'interaction des signaux d'excitation Si émis par ledit émetteur (212/214) avec ladite éprouvette (112), **caractérisé par le fait que** les signaux d'écho reçu par lesdits récepteurs (212/214) forment un jeu M(Si) de valeurs de mesure par rapport à un signal d'excitation Si,
c. une unité d'évaluation adaptée pour déterminer un mouvement de rotation dudit réseau (200) sur la surface à partir d'une pluralité de jeux de valeurs de mesure M(Si) qui sont corrélés à des signaux d'excitation Si se succédant dans le temps.

2. Dispositif selon la revendication 1, **caractérisé par le fait que** les signaux d'excitation sont tels qu'ils interagissent avec des propriétés structurelles de ladite éprouvette (112), telle que, par exemple, la structure géométrique d'une interface de ladite éprouvette (112) ou une inhomogénéité de matière dans le volume de l'éprouvette (112).

3. Dispositif selon la revendication 1, **caractérisé par le fait qu'**un récepteur (212/214) au moins est réalisé de manière à ce qu'il puisse être opéré également en tant qu'émetteur pour émettre la suite chronologique de signaux d'excitation Si.

4. Dispositif selon la revendication 1, **caractérisé par le fait que**, dans le cas desdits récepteurs (212/214), il s'agit de récepteurs à ultrasons, de capteurs à courant de Foucault, de capteurs piézoélectriques, de capteurs de champ magnétique ou de capteurs pour rayonnement électromagnétique.

5. Dispositif selon la revendication 3, **caractérisé par le fait que** les signaux d'excitation Si sont générés chacun par une pluralité de récepteurs (212/214) du réseau (200).

6. Dispositif selon la revendication 1, **caractérisé par le fait que** ladite unité d'évaluation est adaptée en outre pour déterminer à partir de la pluralité de jeux de valeurs de mesure M(Si) un mouvement translatoire du réseau sur la surface de ladite éprouvette (112).

7. Unité de contrôle pour une détermination à résolution spatiale d'une propriété structurelle d'une éprouvette (112), comprenant un dispositif selon la revendication 1, ladite unité de contrôle étant adaptée pour générer à partir des données de mouvement saisies par ledit dispositif et à partir des jeux de valeurs de mesure M(Si) une image de la répartition dans l'espace de la propriété structurelle de ladite éprouvette (112).

8. Unité de contrôle selon la revendication 7, **caractérisée par le fait que** les données de mouvement concernent aussi bien le mouvement rotative que le mouvement translatoire du réseau (200) sur la surface de ladite éprouvette (112).

9. Procédé de détection non destructive d'un mouvement de rotation d'un réseau (200) sur la surface d'une éprouvette (112), comprenant les étapes de procédé suivantes :
a. émettre une suite chronologique de signaux d'excitation Si qui pénètrent au moins en partie dans ladite éprouvette (112) et entrent en interaction avec celle-ci,
b. recevoir des signaux d'écho qui résultent de l'interaction des signaux d'excitation émis Si avec ladite éprouvette (112), au moyen d'un réseau (200) se composant d'une pluralité de récepteurs (212/214), **caractérisé par le fait que** les signaux d'écho reçu par lesdits récepteurs (212/214) forment un jeu M(Si) de valeurs de mesure par rapport à un signal d'excitation Si,
c. déterminer un mouvement de rotation dudit réseau (200) sur la surface de ladite éprouvette (112) à partir d'une pluralité de jeux de valeurs de mesure M(Si) qui sont corrélés à des signaux d'excitation Si se succédant dans le temps.

10. Procédé selon la revendication 9, **caractérisé par le fait que** les signaux d'excitation sont tels qu'ils interagissent avec des propriétés structurelles de ladite éprouvette (112), telle que, par exemple, la structure géométrique d'une interface de ladite éprouvette (112) ou une inhomogénéité de matière dans le volume de l'éprouvette (112).

11. Procédé selon la revendication 9, **caractérisé par le fait qu'**un récepteur (212/214) au moins est réalisé de manière à ce qu'il puisse être opéré également en tant qu'émetteur pour émettre la suite chronologique de signaux d'excitation Si.

12. Procédé selon la revendication 9, **caractérisé par le fait que**, dans le cas desdits récepteurs (212/214), il s'agit de récepteurs à ultrasons, de capteurs à courant de Foucault, de capteurs piézoélectriques, de capteurs de champ magnétique ou de capteurs pour rayonnement électromagnétique.

13. Procédé selon la revendication 11, **caractérisé par le fait que** les signaux d'excitation Si sont générés chacun par une pluralité de récepteurs (212/214) du réseau (200).

14. Procédé selon la revendication 9, **caractérisé par** l'étape de procédé supplémentaire suivante :
d. déterminer un mouvement translatoire du réseau (200) sur la surface de ladite éprouvette (112) à partir de la pluralité de jeux de valeurs de mesure M(Si).

15. Procédé selon la revendication 9, **caractérisé par** l'étape de procédé supplémentaire suivante :
d. générer à partir des données de mouvement déterminées et à partir des jeux de valeurs de mesure M(Si) une image de la répartition dans l'espace de la propriété structurelle de ladite éprouvette (112).

16. Procédé selon la revendication 15, **caractérisé par le fait que** les données de mouvement concernent aussi bien le mouvement rotative que le mouvement translatoire du réseau (200) sur la surface de ladite éprouvette (112).
